(19) **Europäisches Patentamt / European Patent Office / Office européen des brevets**

(11) **EP 4 597 918 A1**

(12) **EUROPEAN PATENT APPLICATION**
published in accordance with Art. 153(4) EPC

(43) Date of publication:
**06.08.2025  Bulletin 2025/32**

(21) Application number: **22961061.3**

(22) Date of filing: **26.09.2022**

(51) International Patent Classification (IPC):
**H04L 9/08** (2006.01)

(52) Cooperative Patent Classification (CPC):
**H04L 9/08**

(86) International application number:
**PCT/KR2022/014384**

(87) International publication number:
**WO 2024/071458 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **AHN, Byungkyu**
  **Seoul 06772 (KR)**
• **LEE, Sangrim**
  **Seoul 06772 (KR)**
• **LEE, Hojae**
  **Seoul 06772 (KR)**
• **KIM, Jayeong**
  **Seoul 06772 (KR)**

(74) Representative: **Plasseraud IP**
  **104 Rue de Richelieu**
  **CS92104**
  **75080 Paris Cedex 02 (FR)**

(54) **METHOD FOR CARRYING OUT USER AUTHENTICATION BY APPLYING PRE-SHARED KEY TO BASIS SELECTION IN QUANTUM COMMUNICATION SYSTEM, AND DEVICE THEREFOR**

(57)     The present disclosure provides a method for carrying out user authentication in a quantum communication system. More specifically, the method comprises the steps of: on the basis of a pre-shared key, generating authentication quantum information by encoding an authentication message for user authentication, wherein a basis, for encoding each bit element constituting the authentication message, the respective bit elements corresponding to the respective positions of bit elements constituting the pre-shared key, is determined on the basis of respective bit values of the bit elements constituting the pre-shared key; transmitting the authentication quantum information to a receiving end via a quantum channel; receiving, from the receiving end, authentication quantum information measurement information related to a value derived by means of the receiving end measuring the authentication quantum information; and carrying out user authentication with the receiving end on the basis of the authentication quantum information measurement information.

[FIG. 21]

Start

On basis of pre-shared key, generate authentication quantum information by encoding authentication message for user authentication — S2110

Transmit authentication quantum information to receiving end via quantum channel — S2120

Receive, from receiving end, authentication quantum information measurement information related to value derived by means of receiving end measuring authentication quantum information — S2130

Carry out user authentication with receiving end on basis of authentication quantum information measurement information — S2140

End

# EP 4 597 918 A1

**Description**

[Technical Field]

The present disclosure relates to a quantum communication system, and more particularly, to a method for carrying out user authentication in a quantum communication system and a device therefor.

[Background Art]

Wireless communication systems have been widely deployed to provide various types of communication services such as voice or data. In general, the wireless communication system is a multiple access system capable of supporting communication with multiple users by sharing available system resources (bandwidth, transmission power, etc.). Examples of multiple access systems include a Code Division Multiple Access (CDMA) system, a Frequency Division Multiple Access (FDMA) system, a Time Division Multiple Access (TDMA) system, a Space Division Multiple Access (SDMA) system, an Orthogonal Frequency Division Multiple Access (OFDMA) system, a Single Carrier Frequency Division Multiple Access (SC-FDMA) system, and an Interleave Division Multiple Access (IDMA) system. In addition, research is continuing on quantum communication, a next-generation communication technology that can overcome the limitations of existing information and communication, such as security and high-speed computation, by applying quantum mechanical characteristics to the information and communication field. Unlike the existing communication based on binary bit information, quantum communication provides a means of generating, transmitting, processing, and storing information in a superposition of 0 and 1. In existing communication technologies, wavelength or amplitude is used to transmit information between a transmitting end and a receiving end, whereas, in quantum communication, photons, the smallest unit of light, are used to transmit information between the transmitting end and the receiving end.

[Disclosure]

[Technical Problem]

An aspect of the present disclosure is to provide a method and device for carrying out user authentication in a quantum direct communication system.
Furthermore, an aspect of the present disclosure is to provide a method and device for carrying out authentication based on a pre-shared key which is previously shared between transmitting and receiving ends.
Furthermore, an aspect of the present disclosure is to provide a method and device for solving the problem of loss of transmission information caused by a mismatch between bases used by the transmitting and receiving ends, when authenticating between the transmitting and receiving ends.
Furthermore, an aspect of the present disclosure is to provide a method and device for carrying out user authentication without a separate error correction process if authentication codes of the transmitting and receiving ends do not match due to a channel error, when authenticating between the transmitting and receiving ends.
The technical objects of the present disclosure are not limited to the aforementioned technical objects, and other technical objects, which are not mentioned above, will be apparently appreciated by a person having ordinary skill in the art from the following description.

[Technical Solution]

The present disclosure provides a method and device for performing user authentication in a quantum communication system.
More specifically, a method for a transmitting end to carry out user authentication in a quantum communication system according to an embodiment of the present disclosure comprises on the basis of a pre-shared key, generating authentication quantum information by encoding an authentication message for user authentication, wherein a basis, for encoding each bit element constituting the authentication message, the respective bit elements corresponding to the respective positions of bit elements constituting the pre-shared key, is determined on the basis of respective bit values of the bit elements constituting the pre-shared key; transmitting the authentication quantum information to a receiving end via a quantum channel, receiving, from the receiving end, authentication quantum information measurement information related to a value derived by means of the receiving end measuring the authentication quantum information; and carrying out user authentication with the receiving end on the basis of the authentication quantum information measurement information.
The length of the pre-shared key and the length of the authentication message for user authentication may be equal.

The pre-shared key may be used to determine a basis used by the receiving end to measure the authentication quantum information.

The success of the user authentication may be determined based on an error rate between (i) a value of the authentication message generated by the transmitting end and (ii) a value of the authentication quantum information measurement information acquired by the transmitting end.

The success of the user authentication may be determined based on a result of a comparison between (i) an error rate between a value of the authentication message generated by the transmitting end and a value of the authentication quantum information measurement information acquired by the transmitting end and (ii) a threshold for determining the success of user authentication.

The user authentication may succeed, based on (i) the error rate, between a value of the authentication message generated by the transmitting end and a value of the authentication quantum information measurement information acquired by the transmitting end, being lower than (ii) the threshold for determining the success of user authentication.

The user authentication may fail based on i) the error rate, between a value of the authentication message generated by the transmitting end and a value of the authentication quantum information measurement information acquired by the transmitting end, being equal to or higher than (ii) the threshold for determining the success of user authentication.

A QBER threshold used for QBER (Quantum bit error rate) estimation for determining the presence of an eavesdropper on the quantum channel may be used as the threshold for determining the success of user authentication.

The method may further comprise transmitting, to the receiving end, a secret key used to encrypt classical information transmitted via a classical channel, based on the success of the user authentication.

The method may further comprise encrypting the classical information based on the secret key; and transmitting the encrypted classical information to the receiving end via the classical channel.

A transmitting end that carries out user authentication in a quantum communication system according to another embodiment of the present disclosure comprises a transmitter for transmitting a wireless signal; a receiver for receiving a wireless signal; at least one processor; and at least one computer memory operably connectable to the at least one processor, and storing instructions that, when executed by the at least one processor, perform operations. The operations include, on the basis of a pre-shared key, generating authentication quantum information by encoding an authentication message for user authentication, wherein a basis, for encoding each bit element constituting the authentication message, the respective bit elements corresponding to the respective positions of bit elements constituting the pre-shared key, is determined on the basis of respective bit values of the bit elements constituting the pre-shared key; transmitting the authentication quantum information to a receiving end via a quantum channel; receiving, from the receiving end, authentication quantum information measurement information related to a value derived by means of the receiving end measuring the authentication quantum information; and carrying out user authentication with the receiving end on the basis of the authentication quantum information measurement information.

A method for a receiving end to carry out user authentication in a quantum communication system according to another embodiment of the present disclosure comprises receiving, from a transmitting end, authentication quantum information generated by encoding an authentication message for user authentication on the basis of a pre-shared key, wherein a basis, for encoding each bit element constituting the authentication message, the respective bit elements corresponding to the respective positions of bit elements constituting the pre-shared key, is determined on the basis of respective bit values of the bit elements constituting the pre-shared key; receiving the authentication quantum information from the transmitting end via a quantum channel; measuring the received authentication quantum information on the basis of the pre-shared key, wherein a measurement basis, for measuring each bit element constituting the received authentication quantum information, the respective bit elements corresponding to the respective positions of bit elements constituting the pre-shared key, is determined on the basis of respective bit values of the bit elements constituting the pre-shared key; transmitting, to the transmitting end, authentication quantum information measurement information related to a value derived by means of the receiving end measuring the authentication quantum information; and carrying out user authentication with the transmitting end on the basis of the authentication quantum information measurement information.

A receiving end that carries out user authentication in a quantum communication system according to another embodiment of the present disclosure comprises a transmitter for transmitting a wireless signal; a receiver for receiving a wireless signal; at least one processor; and at least one computer memory operably connectable to the at least one processor, and storing instructions that, when executed by the at least one processor, perform operations. The operations include receiving, from a transmitting end, authentication quantum information generated by encoding an authentication message for user authentication on the basis of a pre-shared key, wherein a basis, for encoding each bit element constituting the authentication message, the respective bit elements corresponding to the respective positions of bit elements constituting the pre-shared key, is determined on the basis of respective bit values of the bit elements constituting the pre-shared key; receiving the authentication quantum information from the transmitting end via a quantum channel; measuring the received authentication quantum information on the basis of the pre-shared key, wherein a measurement basis, for measuring each bit element constituting the received authentication quantum information, the respective bit elements corresponding to the respective positions of bit elements constituting the pre-shared key, is determined on the basis of respective bit values of the bit elements constituting the pre-shared key; transmitting, to the transmitting end, authentication quantum information measurement information related to a value derived by means of the receiving end measuring the authentication quantum information; and carrying out user authentication with the transmitting end on the basis of the authentication quantum information measurement information.

A non-transitory computer readable medium (CRM) according to another embodiment of the present disclosure that stores one or more instructions, the one or more instructions being executable by one or more processors and including: on the basis of a pre-shared key, generating authentication quantum information by encoding an authentication message for user authentication, wherein a basis, for encoding each bit element constituting the authentication message, the respective bit elements corresponding to the respective positions of bit elements constituting the pre-shared key, is determined on the basis of respective bit values of the bit elements constituting the pre-shared key; transmitting the authentication quantum information to a receiving end via a quantum channel; receiving, from the receiving end, authentication quantum information measurement information related to a value derived by means of the receiving end measuring the authentication quantum information; and carrying out user authentication with the receiving end on the basis of the authentication quantum information measurement information.

A device according to another embodiment of the present disclosure comprises one or more memories and one or more processors functionally connected to the one or more memories. The one or more processors control the device to, on the basis of a pre-shared key, generate authentication quantum information by encoding an authentication message for user authentication, wherein a basis, for encoding each bit element constituting the authentication message, the respective bit elements corresponding to the respective positions of bit elements constituting the pre-shared key, is determined on the basis of respective bit values of the bit elements constituting the pre-shared key; transmit the authentication quantum information to a receiving end via a quantum channel; receive, from the receiving end, authentication quantum information measurement information related to a value derived by means of the receiving end measuring the authentication quantum information; and carry out user authentication with the receiving end on the basis of the authentication quantum information measurement information.

[Advantageous Effects]

The present disclosure has the effect of carrying out user authentication in a quantum communication system.

Furthermore, the present disclosure has the effect of carrying out authentication based on a pre-shared key which is previously shared between transmitting and receiving ends.

Furthermore, the present disclosure has the effect of decreasing the loss of information usable for user authentication caused by a mismatch between bases used by the transmitting and receiving ends, when authenticating between the transmitting and receiving ends.

Furthermore, the present disclosure has the effect of reducing the complexity of an overall user authentication process, because user authentication can be carried out without a separate error correction process if authentication codes of the transmitting and receiving ends do not match due to a channel error, when authenticating between the transmitting and receiving ends.

Advantages which can be obtained in the present disclosure are not limited to the aforementioned effects and other unmentioned effects will be clearly understood by those skilled in the art from the following description.

[Description of Drawings]

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.

FIG. 1 is a view showing an example of a communication system applicable to the present disclosure.
FIG. 2 is a view showing an example of a wireless apparatus applicable to the present disclosure.
FIG. 3 is a view showing a method of processing a transmitted signal applicable to the present disclosure.
FIG. 4 is a view showing another example of a wireless device applicable to the present disclosure.
FIG. 5 is a view showing an example of a hand-held device applicable to the present disclosure.
FIG. 6 is a view showing physical channels applicable to the present disclosure and a signal transmission method using the same.
FIG. 7 is a view showing the structure of a radio frame applicable to the present disclosure.
FIG. 8 is a view showing a slot structure applicable to the present disclosure.

FIG. 9 is a view showing an example of a communication structure providable in a 6G system applicable to the present disclosure.

FIG. 10 is a view showing an example of a quantum coding communication system to which QKD is applied.

FIG. 11 is a view showing an example of a man-in-the middle attack that may occur in quantum communication.

FIG. 12 is a view showing an example of a MAC-based authentication technique.

FIG. 13 is a view showing an example of an authentication scheme based on Wegman & Carter Authentication(WCA).

FIG. 14 is a view for describing a correlation between the number of hash functions and the probability of collision.

FIG. 15 is a view showing an example of quantum authentication information transmission and reception based on random basis selection in an existing quantum communication method.

FIG. 16 is a view showing an example of a user authentication technique using a pre-shared key in order that bases used by transmitting and receiving ends match, in an ideal case where no channel error occurs.

FIG. 17 is a view showing another example of a user authentication technique using a pre-shared key in order that bases used by transmitting and receiving ends match, in an environment where noise such as a channel error actually exists.

FIG. 18 is a flowchart showing an overall process of a user authentication scheme using a pre-shared key for basis selection, proposed in the present disclosure.

FIG. 19 is a view showing an example of a quantum coding communication system including a user authentication method using a pre-shared key for basis selection.

FIG. 20 is a flowchart showing an example of a QKD system including a pre-shared key-based user authentication process and a pre-shared key updating method.

FIG. 21 is a flowchart showing an example in which a user authentication method proposed in the present disclosure is carried out by a transmitting end.

FIG. 22 is a flowchart showing an example in which a user authentication method proposed in the present disclosure is carried out by a receiving end.

[Mode for Disclosure]

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a Base Station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an Advanced Base Station (ABS), an access point, etc.

In the embodiments of the present disclosure, the term terminal may be replaced with a UE, a Mobile Station (MS), a Subscriber Station (SS), a Mobile Subscriber Station (MSS), a mobile terminal, an Advanced Mobile Station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an UpLink (UL). Likewise, the mobile station may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation(5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.xxx.

Communication system applicable to the present disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/-description, the same reference numerals may exemplify the same or corresponding hardware blocks, software blocks or functional blocks unless indicated otherwise.

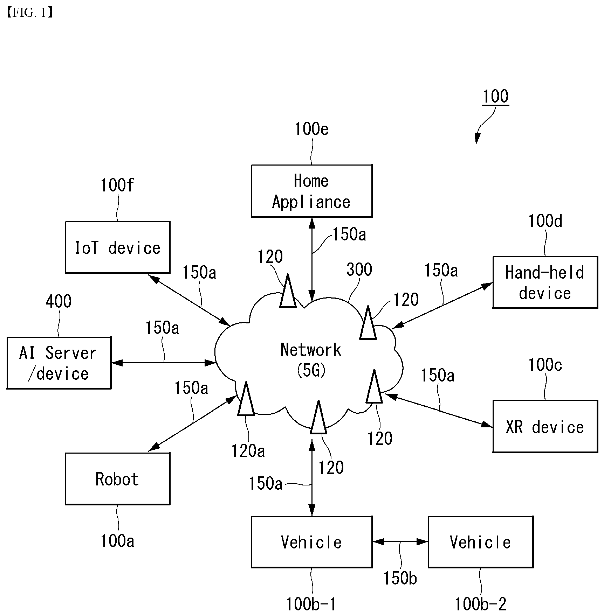

FIG. 1 is a view showing an example of a communication system applicable to the present disclosure. Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, the vehicles may include a vehicle having a wireless communication function, an autonomous vehicle, a vehicle capable of performing vehicle-to-vehicle communication, etc. The vehicles 100b-1 and 100b-2 may include an unmanned aerial vehicle (UAV) (e.g., a drone). The XR device 100c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100d may include a smartphone, a smart pad, a wearable device (e.g., a smart watch or smart glasses), a computer (e.g., a laptop), etc. The home appliance 100e may include a TV, a refrigerator, a washing machine, etc. The IoT device 100f may include a sensor, a smart meter, etc. For example, the base station 120 and the network 130 may be implemented by a wireless device, and a specific wireless device 120a may operate as a base station/network node for another wireless device.

The wireless devices 100a to 100f may be connected to the network 130 through the base station 120. AI technology is applicable to the wireless devices 100a to 100f, and the wireless devices 100a to 100f may be connected to the AI server 100g through the network 130. The network 130 may be configured using a 3G network, a 4G (e.g., LTE) network or a 5G (e.g., NR) network, etc. The wireless devices 100a to 100f may communicate with each other through the base station 120/the network 130 or perform direct communication (e.g., sidelink communication) without through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may perform direct communication with another IoT device (e.g., a sensor) or the other wireless devices 100a to 100f.

Wireless communications/connections 150a, 150b and 150c may be established between the wireless devices 100a to 100f/the base station 120 and the base station 120/the base station 120. Here, wireless communication/connection may be established through various radio access technologies (e.g., 5G NR) such as uplink/downlink communication 150a, sidelink communication 150b (or D2D communication) or communication 150c between base stations (e.g., relay, integrated access backhaul (IAB). The wireless device and the base station/wireless device or the base station and the base station may transmit/receive radio signals to/from each other through wireless communication/connection 150a, 150b and 150c. For example, wireless communication/connection 150a, 150b and 150c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

Communication system applicable to the present disclosure

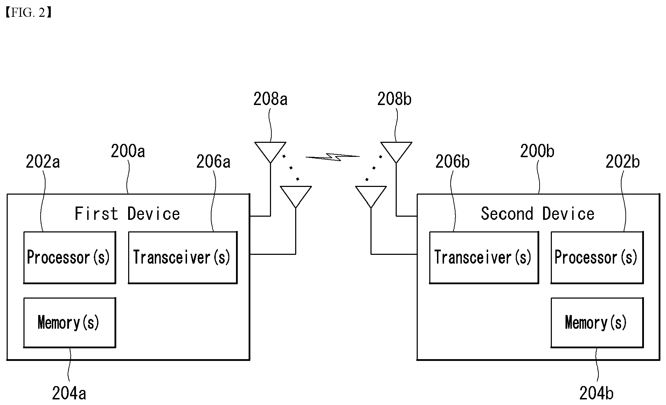

FIG. 2 is a view showing an example of a wireless device applicable to the present disclosure.

Referring to FIG. 2, a first wireless device 200a and a second wireless device 200b may transmit and receive radio signals through various radio access technologies (e.g., LTE or NR). Here, {the first wireless device 200a, the second wireless device 200b} may correspond to {the wireless device 100x, the base station 120} and/or {the wireless device 100x, the wireless device 100x} of FIG. 1.

The first wireless device 200a may include one or more processors 202a and one or more memories 204a and may further include one or more transceivers 206a and/or one or more antennas 208a. The processor 202a may be configured to control the memory 204a and/or the transceiver 206a and to implement descriptions, functions, procedures, proposals, methods and/or operational flowcharts disclosed herein. For example, the processor 202a may process information in the memory 204a to generate first information/signal and then transmit a radio signal including the first information/signal through the transceiver 206a. In addition, the processor 202a may receive a radio signal including second information/signal through the transceiver 206a and then store information obtained from signal processing of the second information/signal in the memory 204a. The memory 204a may be connected with the processor 202a, and store a variety of information related to operation of the processor 202a. For example, the memory 204a may store software code including instructions for performing all or some of the processes controlled by the processor 202a or performing the descriptions, functions, procedures, proposals, methods and/or operational flowcharts disclosed herein. Here, the processor 202a and the memory 204a may be part of a communication modem/circuit/chip designed to implement wireless communication technology (e.g., LTE or NR). The transceiver 206a may be connected with the processor 202a to transmit and/or receive radio signals through one or more antennas 208a. The transceiver 206a may include a transmitter and/or a receiver. The transceiver 206a may be used interchangeably with a radio frequency (RF) unit. In the present disclosure, the wireless device may refer to a communication modem/circuit/chip.

The second wireless device 200b may include one or more processors 202b and one or more memories 204b and may further include one or more transceivers 206b and/or one or more antennas 208b. The processor 202b may be configured to control the memory 204b and/or the transceiver 206b and to implement the descriptions, functions, procedures, proposals, methods and/or operational flowcharts disclosed herein. For example, the processor 202b may process information in the memory 204b to generate third information/signal and then transmit the third information/signal through the transceiver 206b. In addition, the processor 202b may receive a radio signal including fourth information/signal through the transceiver 206b and then store information obtained from signal processing of the fourth information/signal in the memory 204b. The memory 204b may be connected with the processor 202b to store a variety of information related to operation of the processor 202b. For example, the memory 204b may store software code including instructions for performing all or some of the processes controlled by the processor 202b or performing the descriptions, functions, procedures, proposals, methods and/or operational flowcharts disclosed herein. Herein, the processor 202b and the memory 204b may be part of a communication modem/circuit/chip designed to implement wireless communication technology (e.g., LTE or NR). The transceiver 206b may be connected with the processor 202b to transmit and/or receive radio signals through one or more antennas 208b. The transceiver 206b may include a transmitter and/or a receiver. The transceiver 206b may be used interchangeably with a radio frequency (RF) unit. In the present disclosure, the wireless device may refer to a communication modem/circuit/chip.

Hereinafter, hardware elements of the wireless devices 200a and 200b will be described in greater detail. Without being limited thereto, one or more protocol layers may be implemented by one or more processors 202a and 202b. For example, one or more processors 202a and 202b may implement one or more layers (e.g., functional layers such as PHY (physical), MAC (media access control), RLC (radio link control), PDCP (packet data convergence protocol), RRC (radio resource control), SDAP (service data adaptation protocol)). One or more processors 202a and 202b may generate one or more protocol data units (PDUs) and/or one or more service data unit (SDU) according to the descriptions, functions, procedures, proposals, methods and/or operational flowcharts disclosed herein. One or more processors 202a and 202b may generate messages, control information, data or information according to the descriptions, functions, procedures, proposals, methods and/or operational flowcharts disclosed herein. One or more processors 202a and 202b may generate PDUs, SDUs, messages, control information, data or information according to the functions, procedures, proposals and/or methods disclosed herein and provide the PDUs, SDUs, messages, control information, data or information to one or more transceivers 206a and 206b. One or more processors 202a and 202b may receive signals (e.g., baseband signals) from one or more transceivers 206a and 206b and acquire PDUs, SDUs, messages, control information, data or information according to the descriptions, functions, procedures, proposals, methods and/or operational flowcharts disclosed herein.

One or more processors 202a and 202b may be referred to as controllers, microcontrollers, microprocessors or microcomputers. One or more processors 202a and 202b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202a and 202b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202a and 202b or stored in one or more memories 204a and 204b to be driven by one or more processors 202a and 202b. The descriptions, functions, procedures, proposals, methods and/or operational flowcharts disclosed herein implemented using firmware or software in the form of code, a command and/or a set of commands.

One or more memories 204a and 204b may be connected with one or more processors 202a and 202b to store various types of data, signals, messages, information, programs, code, instructions and/or commands. One or more memories 204a and 204b may be composed of read only memories (ROMs), random access memories (RAMs), erasable programmable read only memories (EPROMs), flash memories, hard drives, registers, cache memories, computer-readable storage mediums and/or combinations thereof. One or more memories 204a and 204b may be located inside and/or outside one or more processors 202a and 202b. In addition, one or more memories 204a and 204b may be connected with one or more processors 202a and 202b through various technologies such as wired or wireless connection.

One or more transceivers 206a and 206b may transmit user data, control information, radio signals/channels, etc. described in the methods and/or operational flowcharts of the present disclosure to one or more other apparatuses. One or more transceivers 206a and 206b may receive user data, control information, radio signals/channels, etc. described in the methods and/or operational flowcharts of the present disclosure from one or more other apparatuses. For example, one or more transceivers 206a and 206b may be connected with one or more processors 202a and 202b to transmit/receive radio signals. For example, one or more processors 202a and 202b may perform control such that one or more transceivers 206a and 206b transmit user data, control information or radio signals to one or more other apparatuses. In addition, one or more processors 202a and 202b may perform control such that one or more transceivers 206a and 206b receive user data, control information or radio signals from one or more other apparatuses. In addition, one or more transceivers 206a and 206b may be connected with one or more antennas 208a and 208b, and one or more transceivers 206a and 206b may be configured to transmit/receive user data, control information, radio signals/channels, etc. described in the descriptions, functions, procedures, proposals, methods and/or operational flowcharts disclosed herein through one or more antennas 208a and 208b. In the present disclosure, one or more antennas may be a plurality of physical antennas or a plurality of logical antennas (e.g., antenna ports). One or more transceivers 206a and 206b may convert the received radio signals/channels, etc. from RF band signals to baseband signals, in order to process the received user data, control information, radio signals/channels, etc. using one or more processors 202a and 202b. One or more transceivers 206a and 206b may convert the user data, control information, radio signals/channels processed using one or more processors 202a and 202b from baseband signals into RF band signals. To this end, one or more transceivers 206a and 206b may include (analog) oscillator and/or filters.

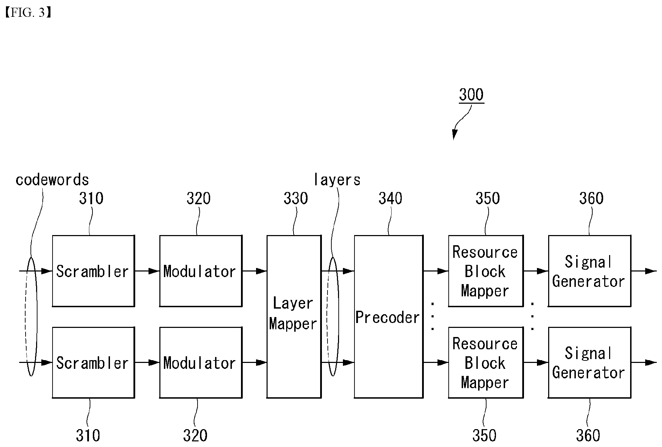

FIG. 3 is a view showing a method of processing a transmitted signal applicable to the present disclosure. For example, the transmitted signal may be processed by a signal processing circuit. At this time, a signal processing circuit 1200 may include a scrambler 300, a modulator 320, a layer mapper 330, a precoder 340, a resource mapper 350, and a signal generator 360. At this time, for example, the operation/function of FIG. 3 may be performed by the processors 202a and 202b and/or the transceiver 206a and 206b of FIG. 2. In addition, for example, the hardware element of FIG. 3 may be implemented in the processors 202a and 202b of FIG. 2 and/or the transceivers 206a and 206b of FIG. 2. In addition, for example blocks 310 to 350 may be implemented in the processors 202a and 202b of FIG. 2 and a block 360 may be implemented in the transceivers 206a and 206b of FIG. 2, without being limited to the above-described embodiments.

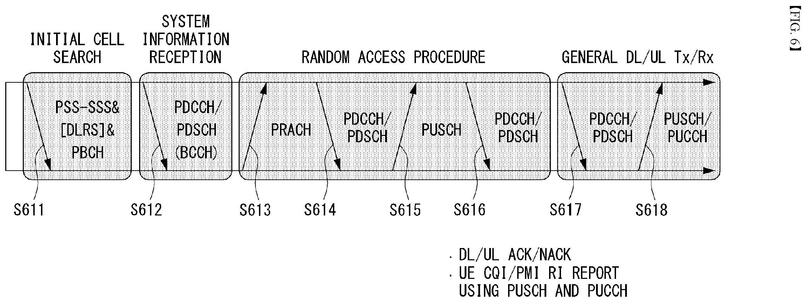

A codeword may be converted into a radio signal through the signal processing circuit 300 of FIG. 3. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH) of FIG. 6. Specifically, the codeword may be converted into a bit sequence scrambled by the scrambler 310. The scramble sequence used for scramble is generated based in an initial value and the initial value may include ID information of a wireless device, etc. The scrambled bit sequence may be modulated into a modulated symbol sequence by the modulator 320. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 330. Modulation symbols of each transport layer may be mapped to corresponding antenna port(s) by the precoder 340 (precoding). The output z of the precoder 340 may be obtained by multiplying the output y of the layer mapper 330 by an N*M precoding matrix W. Here, N may be the number of antenna ports and M may be the number of transport layers. Here, the precoder 340 may perform precoding after transform precoding (e.g., discrete Fourier transform (DFT)) for complex modulation symbols. In addition, the precoder 340 may perform precoding without performing transform precoding.

The resource mapper 350 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 360 may generate a radio signal from the mapped modulation symbols, and the generated radio signal may be transmitted to another device through each antenna. To this end, the signal generator 360 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 310 to 360 of FIG. 3. For example, the wireless device (e.g., 200a or 200b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

Structure of wireless device applicable to the present disclosure

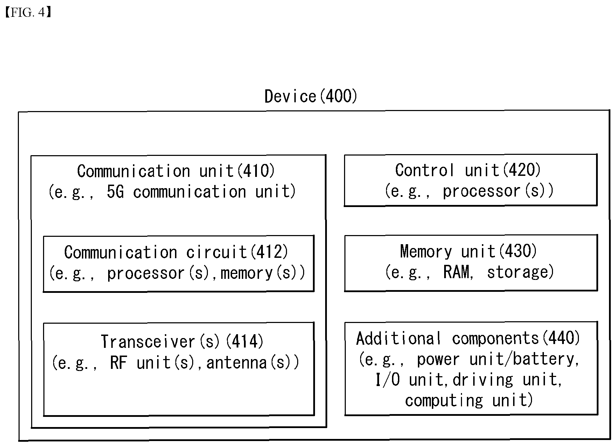

FIG. 4 is a view showing another example of a wireless device applicable to the present disclosure.

Referring to FIG. 4, a wireless device 400 may correspond to the wireless devices 200a and 200b of FIG. 2 and include various elements, components, units/portions and/or modules. For example, the wireless device 400 may include a communication unit 410, a control unit (controller) 420, a memory unit (memory) 430 and additional components 440. The communication unit may include a communication circuit 412 and a transceiver(s) 414. For example, the communication circuit 412 may include one or more processors 202a and 202b and/or one or more memories 204a and 204b of FIG. 2. For example, the transceiver(s) 414 may include one or more transceivers 206a and 206b and/or one or more antennas 208a and 208b of FIG. 2. The control unit 420 may be electrically connected with the communication unit 410, the memory unit 430 and the additional components 440 to control overall operation of the wireless device. For example, the control unit 320 may control electrical/mechanical operation of the wireless device based on a program/code/instruction/information stored in the memory unit 430. In addition, the control unit 420 may transmit the information stored in the memory unit 430 to the outside (e.g., another communication device) through the wireless/wired interface using the communication unit 410 over a wireless/wired interface or store information received from the outside (e.g., another communication device) through the wireless/wired interface using the communication unit 410 in the memory unit 430.

The additional components 440 may be variously configured according to the types of the wireless devices. For example, the additional components 440 may include at least one of a power unit/battery, an input/output unit, a driving unit or a computing unit. Without being limited thereto, the wireless device 400 may be implemented in the form of the robot (FIG. 1, 100a), the vehicles (FIG. 1, 100b-1 and 100b-2), the XR device (FIG. 1, 100c), the hand-held device (FIG. 1, 100d), the home appliance (FIG. 1, 100e), the IoT device (FIG. 1, 100f), a digital broadcast terminal, a hologram apparatus, a public safety apparatus, an MTC apparatus, a medical apparatus, a Fintech device (financial device), a security device, a climate/environment device, anAI server/device (FIG. 1, 140), the base station (FIG. 1, 120), a network node, etc. The wireless device may be movable or may be used at a fixed place according to use example/service.

In FIG. 4, various elements, components, units/portions and/or modules in the wireless device 400 may be connected with each other through wired interfaces or at least some thereof may be wirelessly connected through the communication unit 410. For example, in the wireless device 400, the control unit 420 and the communication unit 410 may be connected by wire, and the control unit 420 and the first unit (e.g., 130 or 140) may be wirelessly connected through the communication unit 410. In addition, each element, component, unit/portion and/or module of the wireless device 400 may further include one or more elements. For example, the control unit 420 may be composed of a set of one or more processors. For example, the control unit 420 may be composed of a set of a communication control processor, an application processor, an electronic control unit (ECU), a graphic processing processor, a memory control processor, etc. In another example, the memory unit 430 may be composed of a random access memory (RAM), a dynamic RAM (DRAM), a read only memory (ROM), a flash memory, a volatile memory, a non-volatile memory and/or a combination thereof.

Hand-held device applicable to the present disclosure

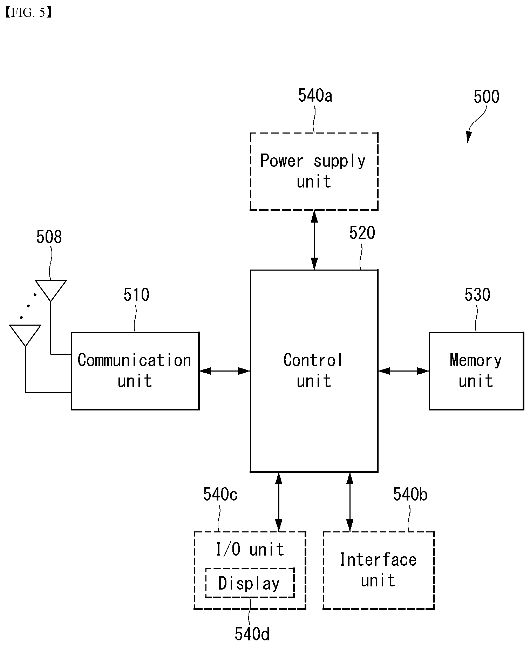

FIG. 5 is a view showing an example of a hand-held device applicable to the present disclosure.

FIG. 5 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 5, the hand-held device 500 may include an antenna unit (antenna) 508, a communication unit (transceiver) 510, a control unit (controller) 520, a memory unit (memory) 530, a power supply unit (power supply) 540a, an interface unit (interface) 540b, and an input/output unit 540c. An antenna unit (antenna) 508 may be part of the communication unit 510. The blocks 510 to 530/540a to 540c may correspond to the blocks 410 to 430/440 of FIG. 4, respectively.

The communication unit 510 may transmit and receive signals (e.g., data, control signals, etc.) to and from other wireless devices or base stations. The control unit 520 may control the components of the hand-held device 500 to perform various operations. The control unit 520 may include an application processor (AP). The memory unit 530 may store data/parameters/program/code/instructions necessary to drive the hand-held device 500. In addition, the memory unit 430 may store input/output data/information, etc. The power supply unit 540a may supply power to the hand-held device 500 and include a wired/wireless charging circuit, a battery, etc. The interface unit 540b may support connection between the hand-held device 500 and another external device. The interface unit 540b may include various ports (e.g., an audio input/output port and a video input/output port) for connection with the external device. The input/output unit 440c may receive or output video information/signals, audio information/signals, data and/or user input information. The input/output unit 540c may include a camera, a microphone, a user input unit, a display 540d, a speaker and/or a haptic module.

For example, in case of data communication, the input/output unit 540c may acquire user input information/signal (e.g., touch, text, voice, image or video) from the user and store the user input information/signal in the memory unit 530. The communication unit 510 may convert the information/signal stored in the memory into a radio signal and transmit the converted radio signal to another wireless device directly or transmit the converted radio signal to a base station. In addition, the communication unit 510 may receive a radio signal from another wireless device or the base station and then restore the received radio signal into original information/signal. The restored information/signal may be stored in the memory unit 530 and then output through the input/output unit 540c in various forms (e.g., text, voice, image, video and haptic).

Physical channels and general signal transmission

In a radio access system, a UE receives information from a base station on a DL and transmits information to the base station on a UL. The information transmitted and received between the UE and the base station includes general data information and a variety of control information. There are many physical channels according to the types/usages of information transmitted and received between the base station and the UE.

FIG. 5 is a view showing physical channels applicable to the present disclosure and a signal transmission method using the same.

The UE which is turned on again in a state of being turned off or has newly entered a cell performs initial cell search operation in step S1011 such as acquisition of synchronization with a base station. Specifically, the UE performs synchronization with the base station, by receiving a Primary Synchronization Channel (P-SCH) and a Secondary Synchronization Channel (S-SCH) from the base station, and acquires information such as a cell Identifier (ID).

Thereafter, the UE may receive a physical broadcast channel (PBCH) signal from the base station and acquire intra-cell broadcast information. Meanwhile, the UE may receive a downlink reference signal (DL RS) in an initial cell search step and check a downlink channel state. The UE which has completed initial cell search may receive a physical downlink control channel (PDCCH) and a physical downlink control channel (PDSCH) according to physical downlink control channel information in step S612, thereby acquiring more detailed system information.

Thereafter, the UE may perform a random access procedure such as steps S613 to S616 in order to complete access to the base station. To this end, the UE may transmit a preamble through a physical random access channel (PRACH) (S613) and receive a random access response (RAR) to the preamble through a physical downlink control channel and a physical downlink shared channel corresponding thereto (S614). The UE may transmit a physical uplink shared channel (PUSCH) using scheduling information in the RAR (S615) and perform a contention resolution procedure such as reception of a physical downlink control channel signal and a physical downlink shared channel signal corresponding thereto (S616).

The UE, which has performed the above-described procedures, may perform reception of a physical downlink control channel signal and/or a physical downlink shared channel signal (S617) and transmission of a physical uplink shared channel (PUSCH) signal and/or a physical uplink control channel (PUCCH) signal (S618) as general uplink/-downlink signal transmission procedures.

The control information transmitted from the UE to the base station is collectively referred to as uplink control information (UCI). The UCI includes hybrid automatic repeat and request acknowledgement/negative-ACK (HARQ-ACK/NACK), scheduling request (SR), channel quality indication (CQI), precoding matrix indication (PMI), rank indication (RI), beam indication (BI) information, etc. At this time, the UCI is generally periodically transmitted through a PUCCH, but may be transmitted through a PUSCH in some embodiments (e.g., when control information and traffic data are simultaneously transmitted). In addition, the UE may aperiodically transmit UCI through a PUSCH according to a request/instruction of a network.

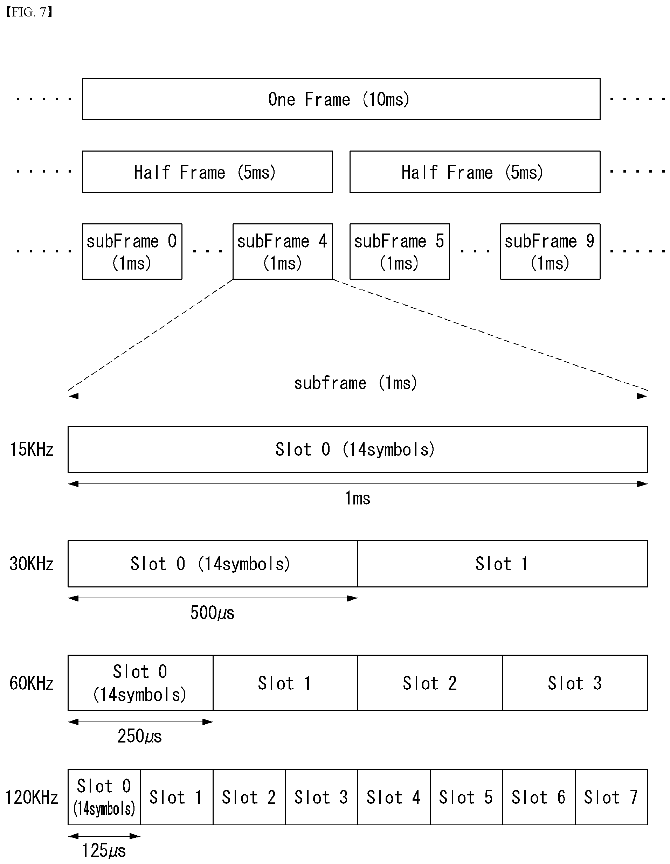

FIG. 7 is a view showing the structure of a radio frame applicable to the present disclosure.

UL and DL transmission based on an NR system may be based on the frame shown in FIG. 7. At this time, one radio frame has a length of 10 ms and may be defined as two 5-ms half-frames (HFs). One half-frame may be defined as five 1-ms subframes (SFs). One subframe may be divided into one or more slots and the number of slots in the subframe may depend on subscriber spacing (SCS). At this time, each slot may include 12 or 14 OFDM(A) symbols according to cyclic prefix (CP). If normal CP is used, each slot may include 14 symbols. If an extended CP is used, each slot may include 12 symbols. Here, the symbol may include an OFDM symbol (or a CP-OFDM symbol) and an SC-FDMA symbol (or a DFT-s-OFDM symbol).

Table 1 shows the number of symbols per slot according to SCS, the number of slots per frame and the number of slots per subframe when normal CP is used, and Table 2 shows the number of symbols per slot according to SCS, the number of slots per frame and the number of slots per subframe when extended CP is used.

[Table 1]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Table 2]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

In Tables 1 and 2 above, $N_{\text{symb}}^{\text{slot}}$ may indicate the number of symbols in a slot, $N_{\text{slot}}^{\text{frame},\mu}$ may indicate the number of slots in a frame, and $N_{\text{slot}}^{\text{subframe},\mu}$ may indicate the number of slots in a subframe.

In addition, in a system, to which the present disclosure is applicable, OFDM(A) numerology (e.g., SCS, CP length, etc.) may be differently set among a plurality of cells merged to one UE. Accordingly, an (absolute time) period of a time resource (e.g., an SF, a slot or a TTI) (for convenience, collectively referred to as a time unit (TU)) composed of the same number of symbols may be differently set between merged cells.

NR may support a plurality of numerologies (or subscriber spacings (SCSs)) supporting various 5G services. For example, a wide area in traditional cellular bands is supported when the SCS is 15 kHz, dense-urban, lower latency and wider carrier bandwidth are supported when the SCS is 30 kHz/60 kHz, and bandwidth greater than 24.25 GHz may be supported to overcome phase noise when the SCS is 60 kHz or higher.

An NR frequency band is defined as two types (FR1 and FR2) of frequency ranges. FR1 and FR2 may be configured as shown in the following table. In addition, FR2 may mean millimeter wave (mmW).

[Table 3]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In addition, for example, in a communication system, to which the present disclosure is applicable, the above-described numerology may be differently set. For example, a terahertz wave (THz) band may be used as a frequency band higher than FR2. In the THz band, the SCS may be set greater than that of the NR system, and the number of slots may be differently set, without being limited to the above-described embodiments. The THz band will be described below.

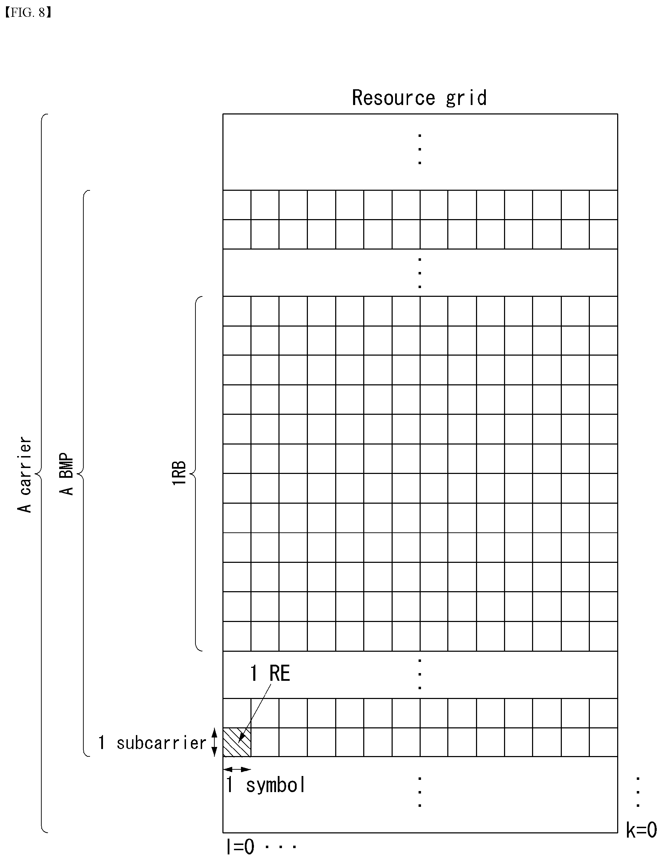

FIG. 8 is a view showing a slot structure applicable to the present disclosure.

One slot includes a plurality of symbols in the time domain. For example, one slot includes seven symbols in case of normal CP and one slot includes six symbols in case of extended CP. A carrier includes a plurality of subcarriers in the frequency domain. A resource block (RB) may be defined as a plurality (e.g., 12) of consecutive subcarriers in the frequency domain.

In addition, a bandwidth part (BWP) is defined as a plurality of consecutive (P)RBs in the frequency domain and may correspond to one numerology (e.g., SCS, CP length, etc.).

The carrier may include a maximum of N (e.g., five) BWPs. Data communication is performed through an activated BWP and only one BWP may be activated for one UE. In resource grid, each element is referred to as a resource element (RE) and one complex symbol may be mapped.

6G communication system

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 4 below. That is, Table 4 shows the requirements of the 6G system.

[Table 4]

| | |
|---|---|
| **Per device peak data rate** | 1 Tbps |
| **E2E latency** | 1 ms |
| **Maximum spectral efficiency** | 100bps/Hz |
| **Mobility support** | Up to 1000km/hr |
| **Satellite integration** | Fully |
| **AI** | Fully |
| **Autonomous vehicle** | Fully |
| **XR** | Fully |
| **Haptic Communication** | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

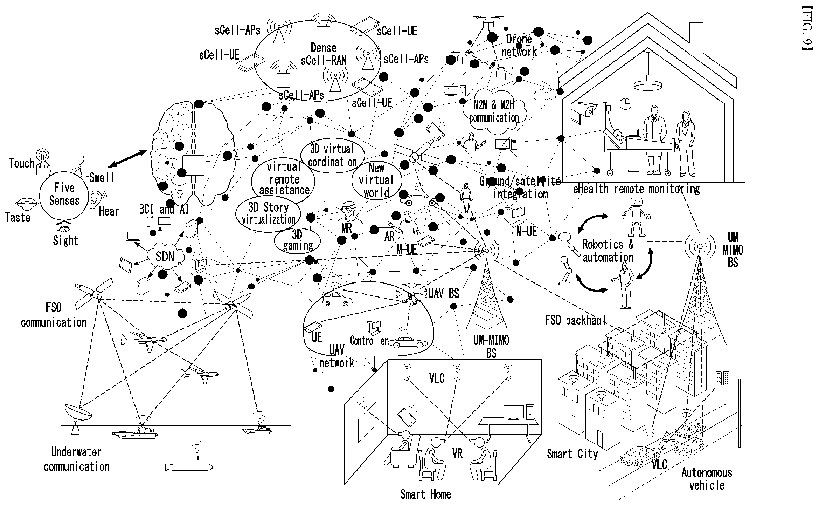

FIG. 9 is a view showing an example of a communication structure providable in a 6G system applicable to the present disclosure.

Referring to FIG. 9, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduce costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

**Quantum Communication**

Quantum communication is a next-generation communication technology that can overcome the limitations of existing information and communication, such as security and high-speed computation, by applying quantum mechanical characteristics to the information and communication field. Quantum communication provides a means of generating, transmitting, processing, and storing information that is impossible or difficult to express in a superposition of 0 and 1 according to binary bit information used in existing communication technologies. In existing communication technologies, wavelength or amplitude is used to transmit information between a transmitting end and a receiving end, whereas, in quantum communication, photons, the smallest unit of light, are used to transmit information between the transmitting end and the receiving end. Particularly, in quantum communication, quantum uncertainty, quantum irreversibility, and unclonability may be used for polarization of photons (light) or phase differences therebetween, and therefore quantum communication allows for communication that ensures perfect security. Also, quantum communication may allow for high-speed communication by using quantum entanglement under a specific condition.

The present disclosure proposes a method and device for user authentication which is a process of checking whether an entity that exchanges information via a quantum channel is a pre-authorized object in quantum key distribution (QKD). More specifically, there is proposed a user authentication method that uses a symmetric key previously shared between transmitting and receiving ends, for basis selection (i) when generating quantum information for user authentication and (ii) when measuring quantum information for user authentication.

Hereinafter, general matters of user authentication will be described first to help understanding of a method proposed in the present disclosure.

**QKD(quantum key distribution) in General**

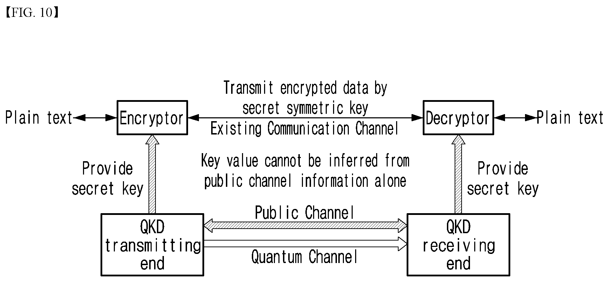

QKD technology is a technique in which secrete symmetric key information required for encrypting and decrypting message information to be transmitted via a classical channel is securely shared between transmitting and receiving ends. FIG. 10 is a view showing an example of a quantum coding communication system to which QKD is applied. Referring to FIG. 10, in QKD, a transmitting end 1010 shares secret key information first with a receiving end 1020 via a quantum channel, and a final secrete symmetric key is generated through a postprocessing process including sifting, QBER estimation, error reconciliation, and privacy amplification by using a classical channel (=public channel). Afterwards, the generated secret key is combined with message information the transmitting end intends to send, thus encrypting the transmission information, and then the encrypted transmission information is transmitted using an existing communication channel, and the receiving end uses the same secret key as used by the transmitting end to decrypt the received encrypted information, thereby restoring the message information transmitted by the transmitting end.

**Man-In-The-Middle Attack and User Authentication**

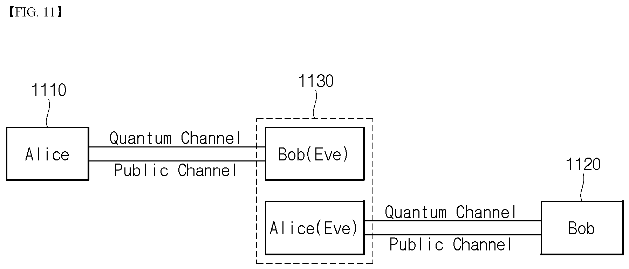

In QKD protocols, the absolute security of a secret key transmitted via a quantum channel can be guaranteed through the non-cloning theorem which is a quantum mechanical characteristic. More specifically, through a QBER (Quantum Bit Error Rate) estimation process using part of information transmitted via a quantum channel, it is possible to check whether message information transmitted via the quantum channel is eavesdropped by a third party, whereby the security of the transmitted message can be guaranteed. However, as shown in FIG. 11 which shows an example of a third party attack that can occur in quantum communication, if a third party, Eve, 1130 is present between Alice 1110, who is a transmitting end, and Bob 1120, who is a receiving end, and attempts a man-in-the-middle attack by pretending to be the receiving end to Alice 1110 and pretending to be the transmitting end to Bob 1120, it is not possible to check whether the third party, Eve, 1130 performs a man-in-the-middle attack, based only on a result of QBER estimation through information transmission between Alice 1110 and Eve 1130 and a result of QBER estimation through information transmission between Eve 1130 and Bob 1120. That is, the third party Eve 1130 may receive information transmitted by Alice 1110 via a quantum channel, and, at the same time, transmit to Bob 1120 information tampered by Eve 1130, and therefore it is not possible to identify the presence of an eavesdropper merely by a process of QBER estimation through respective checking sequences transmitted between Alice 1110 and Eve 1130 and Eve 1130 and Bob 1120. Through the man-in-the-middle attack, the third party, Eve, 1130 is able to know the entire content of delivered data while relaying data between Alice 1110 and Bob 1120, and may also attempt to forge/falsify the data. Accordingly, in order to prevent a man-in-the-middle attack, a user authentication process is required to confirm whether the transmitting end and the receiving end, which are entities that exchange information, are authorized users.

Existing authentication techniques may be divided into hash function-based authentication schemes that include cryptographically strong elements and authentication schemes based on information-theoretic security. In the hash function-based authentication schemes, the probability of collision of hash functions is used as an authentication technology based on computational complexity, and a representative hash function-based technology is the SHA technique. However, since the hash function-based authentication schemes are based on computational complexity, it is highly likely that they will face a security threat in the future due to the emergence of quantum computers. In addition, in quantum cryptographic communication systems, an authentication technology using a keyed hash function family, which is a combination of a symmetric key and a hash function based on information theoretic security, is applied and used in order to enhance security, and quantum communication standardization organizations such as ETSI (European Telecommunications Standards Institute) adopts a scheme using a keyed hash function family as a standard authentication scheme. In the above method, a hash function called Strongly Universal Hashing is used as a message authentication code (MAC) algorithm to generate a message authentication code (MAC) used in an authentication process, and a symmetric key used as a one time pad (OTP) is additionally used in the generation process. This scheme is known to be the most secure scheme because there is a very low chance of information restoration from the MAC through a reversal process unless symmetric key information is known.

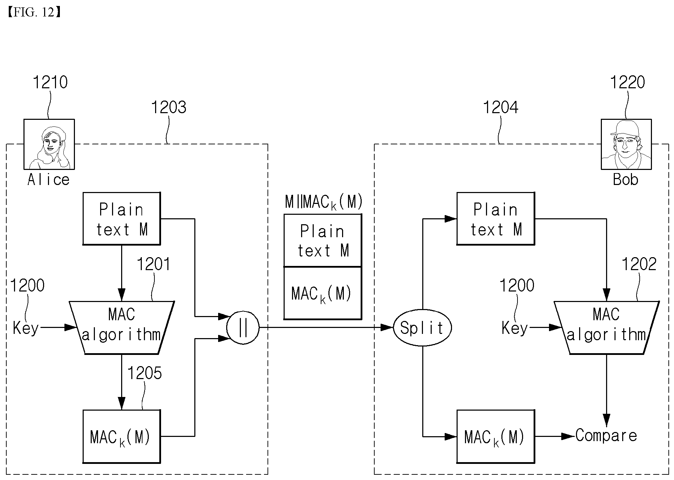

The MAC-based authentication technique is currently applied as a standard authentication method for quantum information transmission techniques such as QKD, and FIG. 12 is a view showing an example of the MAC-based authentication technique.

MAC is used to verify the integrity of messages, and is an authentication technique based on the fact that it is hard for a third party to know which MAC algorithm is used in MAC generation, because the third party does not know one-time symmetric key information previously shared between transmitting and receiving ends 1210 and 1220 First, before an authentication process is performed, the same symmetric key information 1200 and MAC algorithms 1201 and 1202 are shared by the transmitting end 1210 and the receiving end 1220. Afterwards, once the transmitting end 1210 inputs a plaintext message used for authentication into the MAC algorithm 1201, the algorithm to be used is selected from the MAC algorithms based on the value of the pre-shared key 1200. Next, when the plaintext message 1203 is inputted into the MAC algorithm 1201 selected by the transmitting end 1210, a MAC 1205 is acquired as an output, and the transmitting end 1210 sends the plaintext message 1203 generated by itself and the MAC 1205 via a classical channel in order for the receiving end 1220 to generate a MAC. The receiving end inputs the received plaintext message 1204 into the MAC algorithm 1202 of the receiving end 1220. At this time, the receiving end 1220 is able to generate a MAC with the same MAC algorithm 1202 as the transmitting end 1210, since it has the same pre-shared key as the transmitting end 1210. Lastly, the receiving end 1220 compares the MAC 1205 transmitted by the transmitting end 1210 and the MAC generated by the receiving end 1220 to check whether they match. If the value of the MAC 1205 transmitted by the transmitting end 1210 and the value of the MAC generated by the receiving end 1220 match, the authentication is passed/succeeds, and if the two values do not match, the authentication fails.

In an authentication scheme using MAC, pre-shared symmetric key information is not information transmitted via a classical channel but information previously agreed upon only by the transmitting and receiving ends. Thus, even if a third party who does not know the pre-shared symmetric key information acquires message information, the third party is not able to find out which MAC algorithm is applied, from the message information acquired by the third party, unless the third party has acquired the symmetric key, and therefore security can be guaranteed. Accordingly, it can be understood that the more varied the method of configuring a MAC algorithm, the higher the security of an authentication scheme using MAC.

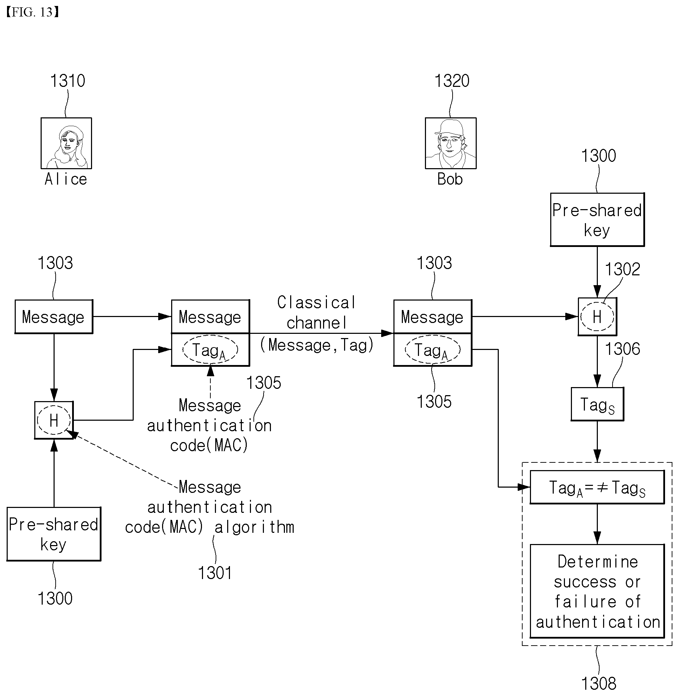

In quantum key distribution (QKD) protocols which are currently applied as a security technology of 4G LTE/5G, the WCA technique proposed by Wegman and Carter is adopted and used as a standard authentication technology, and a symmetric key generated in the form of a one time pad and a Strongly Universal Hash class are used to generate a tag as a MAC used for authentication. FIG. 13 is a view showing an example of an authentication scheme based on Wegman & Carter Authentication(WCA).

The authentication method of FIG. 13 is applicable for both user authentication for checking for a change of the transmitter/receiver during message transmission and message authentication for checking for a change of the content and order of message information. In FIG. 13, the transmitting end 1310 generates tag information 1305 serving as a MAC from the message information 1303 by using a pre-shared key 1300 and a MAC algorithm 1301, and a Hash function of a Strongly Universal Hash class is used as the MAC algorithm. In this case, the pre-shared key information 1300 allows for selecting which hash function $h_k$ to be used at Hs 1301 and 1302 of the transmitting and receiving ends 1310 and 1320, and the pre-shared key is assigned $\log_2|H|$ bits, wherein $|H|$ represents the number of hash functions constituting a hash function set. The tag information 1305 is denoted by $T = h_k(m)$, and is obtained by passing a message m of the authentication process as an input through a hash function $h_k$ selected from the pre-shared key. Afterwards, the receiving end 1320 compares tag information 1306 of the receiving end 1320 obtained from the pre-shared key 1300 and hash function 1302 of the receiving end 1320 by using the message 1303 received by the receiving end 1320 with the tag information 1305 received from the transmitting end 1310, to check for a match between the two tag information and then determine (1308) whether to perform authentication.

In the Wegman & Carter authentication technique, a hash function is used as a MAC algorithm as mentioned above, and the hash function is a function that takes information of any length as input and returns a hash value of a fixed length as output, and is often called a message digest because the original-length text is reduced into a fixed size.

A hash function may be used as a MAC in an authentication process based on the following three characteristics:

Preimage resistance (One sayness): Given an arbitrary output value y, it is computationally infeasible to find an input value x that satisfies y=h(x).

2nd Preimage resistance: Given an arbitrary input value x, there exists h(x), and it is computationally infeasible to find another input value x' that satisfies x≠x' such that h(x) = h(x').

Collision resistance: It is computationally infeasible to find two input values x, x' that satisfy the hash function h(x) = h(x').

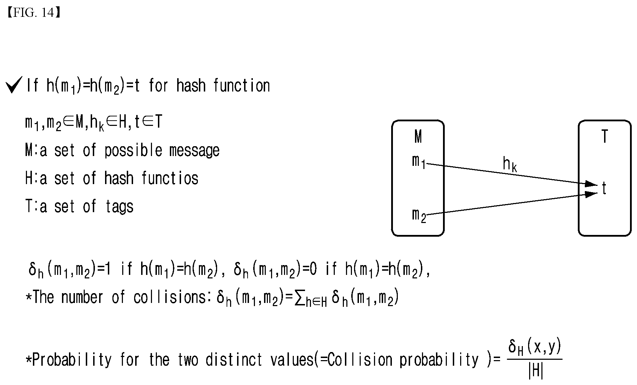

FIG. 14 is a view for describing a correlation between the number of hash functions and the probability of collision.

In WCA, when Eve, the third party, attempts a man-in-the-middle-attack where the message m is replaced with m' and a tag is inferred and sent, Eve does not know which hash function the transmitting end and the receiving end use, and therefore infers a tag by selecting an arbitrary hash function, which makes the probability of success $1/|T|$, wherein $|T|$ means the number of tags. That is, the number of tags is determined by the number of types $|H|$ of hash functions used, and it can be thus said that using more types of hash functions lowers the chance that Eve will infer the tag. Accordingly, it can be inferred that, the larger the number of hash functions, the lower the probability of collision, as in the collision probability formula in FIG. 14.

## Definitions of Terms

For convenience of explanation, the following symbols/abbreviations/terms may be used interchangeably in the present disclosure.

- QDC: Quantum Direct Communication

- QSDC: Quantum Secure Direct Communication
- QBER: Quantum Bit Error Rate
- QKD: Quantum Key Distribution
- MIMA: Man-in-middle-attack
- MAC: Message Authentication Code
- WCA: Wegman-Carter Authentication
- OTP: One Time Pad
- ITS: Information Theoretically Secure

The following problems to be solved can be resolved through a user authentication method proposed in the present disclosure.

(1) In existing quantum communication, when the transmitting end, Alice, performs polarization coding on message information and the receiving end, Bob, measures quantum information transmitted over a quantum channel, bases are randomly chosen by the transmitting and receiving ends. Thus, an additional information sharing process needs to be performed between the transmitting and receiving ends in order to achieve a match between (i) the basis used for polarization coding by the transmitting end, Alice, and (ii) the basis used for measurement by the receiving end, Bob. In this process, a basis mismatch will occur with a probability of 50 %, and therefore half of the quantum information used for authentication, that is generated by the transmitting end, Alice, and transmitted to the receiving end, Bob, will be discarded.

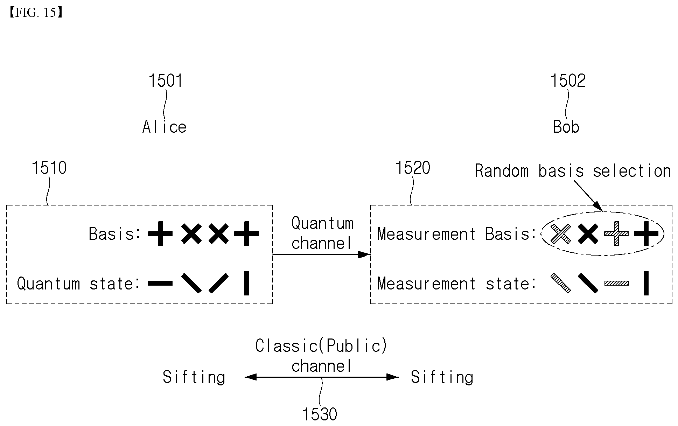

More specifically, the aforementioned problem will be described with reference to FIG. 15. FIG. 15 is a view showing an example of quantum information transmission and reception based on random basis selection in an existing quantum communication method. In FIG. 15, the transmitting end 1501 encodes information the transmitting end 1501 intends to send by using a quantum state determined based on a randomly chosen basis, and then sends the encoded quantum information to the receiving end 1502 (1510). Afterwards, the receiving end 1502 receives the quantum information sent by the transmitting end 1501, in which case the receiving end 1502 does not know the basis used for encoding by the transmitting end 1501, and therefore randomly chooses a basis in order to measure the received quantum information. Although in FIG. 15 the transmitting end 1501 uses "$+ \times \times +$" bases for encoding from the left to the right, the receiving end 1502 uses "$\times \times + +$" bases from the left to the right to measure quantum information according to random basis selection, since it does not know information on the basis used by the transmitting end 1501. Due to this, among the bases used respectively by the transmitting and receiving ends, a basis mismatch occurs at the first basis from the left and the third basis from the left. The bits where the bases of the transmitting and receiving ends do not match cannot be used as transmission information. Thus, in quantum communication, a sifting process is performed via a classical channel to pick out the bits where the bases of the transmitting and receiving ends match, after measuring transmitted quantum states by using random bases (S1530). As a result of the sifting process, the transmitting and receiving ends exchange the basis information used by the transmitting and receiving ends via a classical channel, and quantum information corresponding to the bits where the basis used for encoding by the transmitting end 1501 and the basis used for measurement by the receiving end 1502 match is used as valid information and the remaining bits where the bases do not match are discarded. In FIG. 15, due to the basis mismatch, the information at the first position from the left of the quantum information sent by the transmitting end 1501 and the information at the third position from the left do not match the information at the first position from the left of the quantum information measured by the receiving end 1502 and the information at the third position from the left, and therefore half of the information sent by the transmitting end 1501 is discarded. Although FIG. 15 shows an example in which only half of the bases used by the transmitting and receiving ends match, when N (a non-negative integer) bases are used for encoding and measurement by the transmitting and receiving ends, at least one basis may match, all bases may match, or all bases may not match. To put this in a generalized way, the probability that at least one unit of information out of information of length N will be discarded may be expressed as $1-(1/2)^N$. That is, the probability that at least one unit of information will be discarded refers to a value obtained by subtracting the probability value $1-(1/2)^N$ that all bases will match at the transmitting and receiving ends from the probability value 1 for all cases.

Accordingly, the present disclosure proposes a method for solving the problem of having a chance of half of the entire quantum information being discarded which might happen due to the 50 % probability of a mismatch between a basis used by the transmitting end to encode information generated for authentication and a basis used by the receiving end to measure encoded and transmitted quantum information.

(2) An existing authentication method for quantum communication using a classical channel requires the assumption that users connected via a classical channel and a quantum channel are always the same.

More specifically, in quantum communication, a secret key or message is transmitted via a quantum channel, and a classical channel is used as a channel over which additional information needed in additional procedures such as postprocessing is exchanged. Accordingly, when performing authentication in the existing authentication method, information for authentication is exchanged between transmitting and receiving ends via a classical channel, despite the fact that the most important thing is to perform user authentication in a quantum channel over which information is delivered. Such an existing authentication method may be effective on the assumption that users connected via a classical channel and a quantum channel are always the same, but this assumption does not hold if, in actuality, the third party performs a man-in-the-middle attack only on the quantum channel, which may lead to a problem. Therefore, the present disclosure proposes a method of user authentication via a quantum channel.

(3) In the existing authentication method, the transmitting and receiving ends each generate authentication information (MAC, Tag, etc.), the transmitting end/receiving end deliver the generated authentication information to the receiving end/transmitting end, and the receiving end/transmitting end determine whether the authentication is passed (succeeds) based on whether the authentication information received from the transmitting end/receiving end and the authentication information generated by the receiving end/transmitting end match. However, in the process in which the transmitting end/receiving end deliver the authentication information generated by the transmitting end/receiving end to the receiving end/transmitting end via a channel, an authentication information error may occur due to the effect of the channel, in which case there arises a need to apply an error correction code in order to achieve an authentication information match between the transmitting and receiving ends.

More specifically, the existing authentication method based on a comparison of authentication information generated individually by the transmitting and receiving ends is premised on the assumption that no channel error occurs. However, since channel errors occur in actual communication environments, it is not possible to have an exact match between authentication information of the transmitting and receiving ends because an error occurs as the authentication information passes through a channel, even though the transmitting and receiving ends generate the same authentication information individually through the same processing procedure. Due to an authentication information mismatch between the transmitting and receiving ends, caused by an error that occurs as the authentication information passes through a channel, there is a need for a process for reversing authentication information with an error to the original information with no error through an error correction process. The error correction process serves as an element that increases the complexity of the overall authentication process, thereby causing a decrease in throughput. Therefore, the present disclosure proposes an authentication method that does not include an error correction process.

The present disclosure proposes a user authentication method applicable in QKD technology. Even though, in quantum communication, information to be sent, such as a secret key, a message, etc. is delivered via a quantum channel, it is assumed that, in the existing authentication scheme, authentication is carried out via a classical channel and a user connected via the quantum channel is always the same as a user connected via the classical channel. However, this assumption may become a security weakness in that quantum communication is used as a technology that ensures unconditional security. Accordingly, the present disclosure proposes a user authentication method using information transmitted over a quantum channel, in order to compensate for the weakness resulting from the assumption in the existing authentication method. Moreover, the present disclosure proposes a method in which authentication information is exchanged without information loss due to an additional process of exchanging basis information and random basis selection, through a pre-shared key-based authentication method. Lastly, the present disclosure proposes an authentication method that can increase efficiency in terms of resource use compared to the existing authentication method, by determining whether authentication is passed, based on the error rate of authentication information.

## User Authentication Method through Basis Selection based on Pre-shared Key (Pre-shared Symmetric Key)

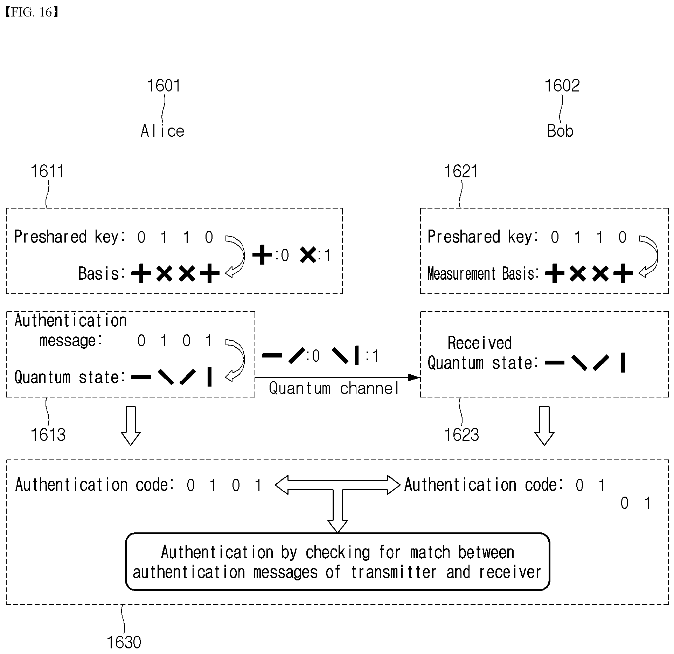

The present disclosure proposes a user authentication method that verifies whether transmitting and receiving objects are authorized objects by using a pre-shared key which is previously shared between the transmitting end and the receiving end. More specifically, the method proposed in the present disclosure uses a pre-shared key in order to achieve a match between (i) a basis used by the transmitting end to generate an authentication message transmitted via a quantum channel and (ii) a basis used by the receiving end to measure an authentication message transmitted via a quantum channel. According to the method proposed in the present disclosure, it is possible to solve the problem occurring in the existing authentication method that involves partial discarding of received authentication message information without being used for user authentication, which is caused when the receiving end measures a received authentication message based on random basis selection. Hereinafter, the method proposed in the present disclosure will be described more concretely with reference to FIG. 16.

FIG. 16 is a view showing an example of a user authentication technique using a pre-shared key in order that bases used by transmitting and receiving ends match. FIG. 16 shows a process of generating an authentication code used for user authentication, under the assumption of a noise-free channel. First, the same preshared key for user authentication is previously shared between the transmitting and receiving ends 1601 and 1602. In this case, the preshared key has the same length as authentication message information used for authentication. The transmitting end 1601 determines a basis for encoding (polarization coding) an authentication message based on a preshared key value (1611). That is, the basis for encoding an authentication message is determined depending on the value of a bit at a specific position in a bit string constituting the preshared key. Referring to FIG. 16, it may be agreed that, if the value of a bit at a specific position in a bit string constituting the preshared key is 0, an orthogonal basis is used when encoding the bit of the authentication message corresponding to the bit at the specific position, and if the value of the bit at the specific position is 1, a diagonal basis is used when encoding the bit of the authentication message corresponding to the bit at the specific position. On the contrary, it may be agreed that, if the value of a bit at a specific position in a bit string constituting the preshared key is 1, an orthogonal basis is used when encoding the bit of the authentication message corresponding to the bit at the specific position, and if the value of the bit at the specific position is 0, a diagonal basis is used when encoding the bit of the authentication message corresponding to the bit at the specific position. Referring back to FIG. 16, since the value of the preshared key is 0110 in FIG. 16, basis information used for encoding (polarization coding) to transmit the authentication message is determined as $+ \times \times +$ based on the value of the preshared key, and the transmitting end 1601 generates a quantum state (quantum information) corresponding to the value of the authentication message by using the determined basis (1613). In this case, it may be agreed between the transmitting and receiving ends that, if the authentication message is in a polarization state of 0 or 45 degrees, the bit value is 0, and if the authentication message is in a polarization state of 90 or 135 degrees, the bit value is 1. More specifically, in FIG. 16, since the determined bases for encoding are "$+ \times \times +$" and the authentication message is 0101, the bit 0 of the authentication message corresponding to the first basis + is encoded by the + basis into a quantum state with 0 degree polarization, the bit 1 of the authentication message corresponding to the second basis $\times$ is encoded by the $\times$ basis into a quantum state with 135 degree polarization, the bit 0 of the authentication message corresponding to the third basis $\times$ is encoded by the $\times$ basis into a quantum state with 45 degree polarization, and the bit 1 of the authentication message corresponding to the fourth basis + is encoded by the + basis into a quantum state with 90 degree polarization. The transmitting end 1601 sends the generated quantum state information to the receiving end 1602 via a quantum channel. The receiving end 1602 selects a measurement basis for measuring the received quantum state information, by using the same preshared key as the preshared key of the transmitting end 1601 (1621). More specifically, since the value of the preshared key is 0110, the measurement basis information for measuring the received quantum state information is determined as $+ \times \times +$. In this case, the quantum state with 0 degree polarization, which is the first quantum information of the received quantum state information corresponding to the first measurement basis +, is measured by using the measurement basis +, the quantum state with 135 degree polarization, which is the second quantum information of the received quantum state information corresponding to the second measurement basis $\times$, is measured by using the measurement basis $\times$, the quantum state with 45 degree polarization, which is the third quantum information of the received quantum state information corresponding to the third measurement basis $\times$, is measured by using the measurement basis $\times$, and the quantum state with 90 degree polarization, which is the fourth quantum information of the received quantum state information corresponding to the fourth measurement basis +, is measured by using the measurement basis + (1623). Through this, the receiving end 1602 is able to acquire an authentication code 0101. In this manner, the receiving end 1602 measures the received quantum state information, which is the quantum information transmitted by the transmitting end 1601, by using the same basis as used by the transmitting end 1601 for encoding the authentication message as a measurement basis, thereby overcoming the problem of information loss which occurs due to a basis mismatch at the transmitting and receiving ends, that is caused by the measurement based on random basis selection in the existing authentication method. Lastly, the transmitting end 1601 receives, via a classical channel, the authentication code the receiving end 1602 has acquired through measurement, and compares the authentication code generated by the transmitting end 1601 and the authentication code received from the receiving end, thereby determining whether the authentication is passed (succeeds) based on whether the two authentication codes match.

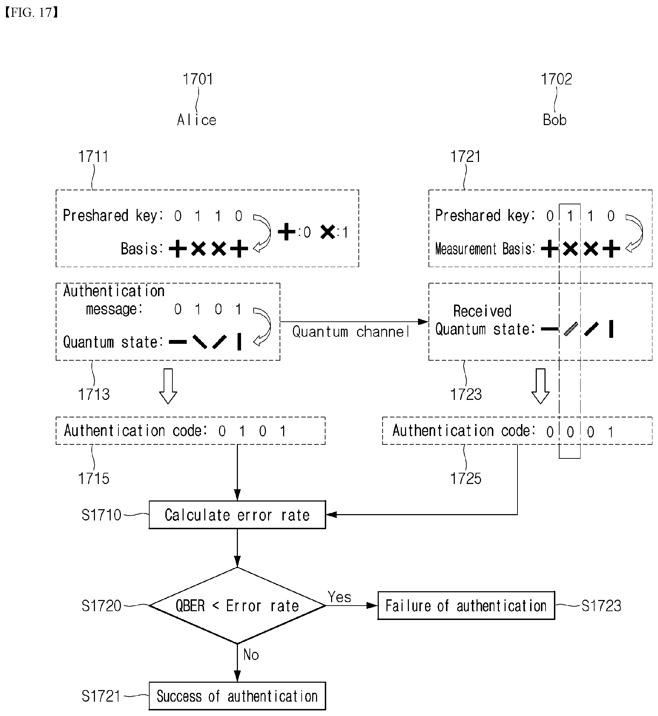

Although FIG. 16 has been described on the assumption of a noise-free channel, channel errors exist in actual quantum channels, and therefore the receiving end is not able to acquire the same authentication code as generated by the transmitting end even if the transmitting and receiving ends each generate and measure an authentication message by the same basis. Hereinafter, an application of a method proposed in the present disclosure over a channel where noise exists will be described more concretely with reference to FIG. 17.

FIG. 17 is a view showing another example of a user authentication technique using a pre-shared key in order that bases used by transmitting and receiving ends match. FIG. 17 shows a process of generating an authentication code used for user authentication, which relates to a method of user authentication in a channel where noise exists.

First, the same preshared key for user authentication is previously shared between the transmitting and receiving ends 1701 and 1702. In this case, the preshared key has the same length as authentication message information used for authentication. The transmitting end 1701 determines a basis for encoding (polarization coding) an authentication message based on a preshared key value (1711). That is, the basis for encoding an authentication message is determined depending on the value of a bit at a specific position in a bit string constituting the preshared key. Referring to FIG. 17, it may be agreed that, if the value of a bit at a specific position in a bit string constituting the preshared key is 0, an orthogonal basis is used when encoding the bit of the authentication message corresponding to the bit at the specific position, and if the value of the bit at the specific position is 1, a diagonal basis is used when encoding the bit of the authentication message corresponding to the bit at the specific position. On the contrary, it may be agreed that, if the value of a bit at a specific position in a bit string constituting the preshared key is 1, an orthogonal basis is used when encoding the bit of the authentication message corresponding to the bit at the specific position, and if the value of the bit at the specific position is 0, a diagonal basis is used when encoding the bit of the authentication message corresponding to the bit at the specific position.

Referring back to FIG. 17, since the value of the preshared key is 0110 in FIG. 17, basis information used for encoding (polarization coding) to transmit the authentication message is determined as + ×× + based on the value of the preshared key, and the transmitting end 1701 generates a quantum state (quantum information) corresponding to the value of the authentication message by using the determined basis (1713). In this case, it may be agreed between the transmitting and receiving ends that, if the authentication message is in a polarization state of 0 or 45 degrees, the bit value is 0, and if the authentication message is in a polarization state of 90 or 135 degrees, the bit value is 1. More specifically, in FIG. 17, since the determined basis for encoding are "+ ×× +" and the authentication message is 0101, the bit 0 of the authentication message corresponding to the first basis + is encoded by the + basis into a quantum state with 0 degree polarization, the bit 1 of the authentication message corresponding to the second basis × is encoded by the × basis into a quantum state with 135 degree polarization, the bit 0 of the authentication message corresponding to the third basis × is encoded by the × basis into a quantum state with 45 degree polarization, and the bit 1 of the authentication message corresponding to the fourth basis + is encoded by the + basis into a quantum state with 90 degree polarization. The transmitting end 1701 sends the generated quantum state information to the receiving end 1702 via a quantum channel. In this case, since a channel error exists in FIG. 17, the quantum state information with 135 degree polarization at the second position of the quantum state information sent by the transmitting end 1701 is converted into quantum state information with 45 degree polarization due to the channel error. The receiving end 1702 selects a measurement basis for measuring the received quantum state information, by using the same preshared key as the preshared key of the transmitting end 1701 (1721). More specifically, since the value of the preshared key is 0110, the measurement basis information for measuring the received quantum state information is determined as + ×× +. In this case, the quantum state with 0 degree polarization, which is the first quantum information of the received quantum state information corresponding to the first measurement basis +, is measured by using the measurement basis +, the quantum state with 45 degree polarization, which is caused by an error and which is the second quantum information of the received quantum state information corresponding to the second measurement basis ×, is measured by using the measurement basis ×, the quantum state with 45 degree polarization, which is the third quantum information of the received quantum state information corresponding to the third measurement basis ×, is measured by using the measurement basis ×, and the quantum state with 90 degree polarization, which is the fourth quantum information of the received quantum state information corresponding to the fourth measurement basis +, is measured by using the measurement basis + (1723). Through this, the receiving end 1702 is able to acquire an authentication code 0001. Even though the receiving end has performed a measurement using a pre-agreed measurement basis, the authentication code at the transmitting end and the authentication code at the receiving end do not match due to a channel error. In the exiting authentication method, it is possible to achieve a match between the authentication code of the transmitting end and the authentication code of the receiving end by performing error correction on an error caused by channel noise; however, when applying an error correction code, an additional procedure is needed to exchange additional information required for error correction via a classical channel and perform error correction based on the additional information, thus increasing the complexity of the overall authentication process. According to a method proposed in the present disclosure, it is possible to determine whether authentication succeeds/-fails without using an error correction code in actual communication environments where a mismatch between authentication codes generated individually by the transmitting and receiving ends is inevitable. Referring back to FIG. 17, the receiving end 1702 sends the authentication code 0001 acquired by the receiving end 1702 to the transmitting end 1701 via a classical channel, and the transmitting end 1701 estimate the error rate by comparing the value of the authentication code received from the receiving end 1702 with the value of the authentication code generated by the transmitting end 1701 (S1701). Next, the transmitting end 1701 determines whether the error rate estimated in S1710 is above a QBER threshold (S1720). The pass (success) of the authentication is determined based on a determination result in S1720. If the error rate estimated in S1710 is lower than the QBER threshold, it is determined that the authentication has succeeded (S1721), or if the error rate estimated in S1710 is equal to or higher than the QBER threshold, it is determined that the authentication has failed (S1723). Once it is determined that the authentication has failed, the rest of the secret key sharing process is suspended. Based on the description of FIG. 17, when there is a mismatch between an authentication code generated by the transmitting end and an authentication code acquired by the receiving end, due to a channel error, user authentication may be carried out without including a separate error correction process in the user authentication process, and, as a result, the complexity of the overall user authentication process can be decreased.

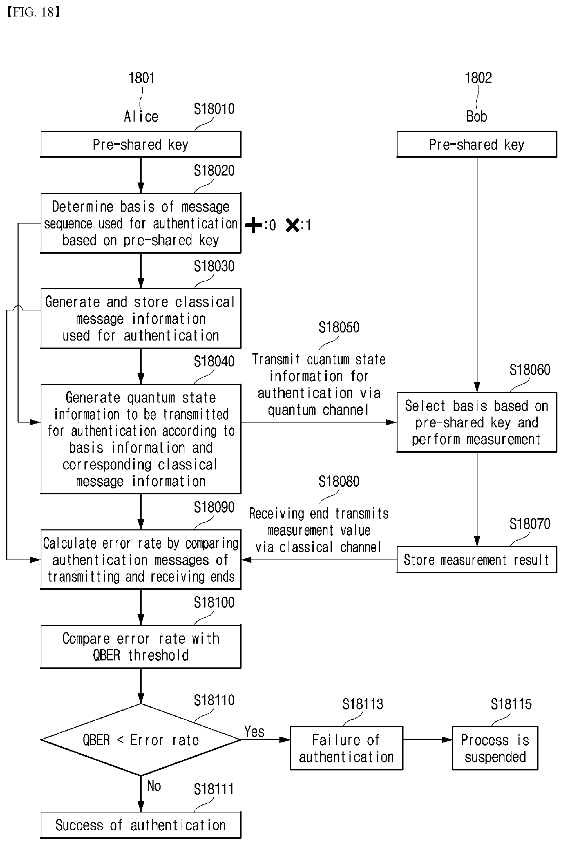

FIG. 18 is a flowchart showing an overall process of a user authentication scheme using a pre-shared key for basis selection, proposed in the present disclosure.

First, the same preshared key for user authentication is previously shared between transmitting and receiving ends 1801 and 1802 (S18010). In this case, the preshared key has the same length as authentication message information used for authentication. Here, the preshared key is shared before a secret key is sent in a QKD system, and refers to a symmetric key that can be used as a one time pad (OTP). The preshared key is discarded after one-time use, and replaced through a process of being updated with a new preshared key.

Next, the transmitting end 1801 determines a basis for encoding (polarization coding) an authentication message based on a preshared key value (18020). That is, the basis for encoding an authentication message is determined depending on the value of a bit at a specific position in a bit string constituting the preshared key. Referring to FIG. 17, it may be established that, if the value of a bit at a specific position in a bit string constituting the preshared key is 0, an orthogonal basis is used when encoding the bit of the authentication message corresponding to the bit at the specific position, and if the value of the bit at the specific position is 1, a diagonal basis is used when encoding the bit of the authentication message corresponding to the bit at the specific position. On the contrary, it may be established that, if the value of a bit at a specific position in a bit string constituting the preshared key is 1, an orthogonal basis is used when encoding the bit of the authentication message corresponding to the bit at the specific position, and if the value of the bit at the specific position is 0, a diagonal basis is used when encoding the bit of the authentication message corresponding to the bit at the specific position.

Next, the transmitting end 1801 generates classical message information (authentication message information) used for user authentication, and stores the classical message information used for user authentication to compare it later with an authentication code acquired by the receiving end, that is received from the receiving end (S18030).

Afterwards, the transmitting end 1801 generates quantum state authentication message information according to a basis determined based on the preshared key and the classical message information (authentication message information) for authentication, and then transmits it to the receiving end 1802 via a quantum channel (S18040 and S18050).

The receiving end 1802 receives the quantum state authentication message information from the transmitting end 1801, selects a measurement basis for measuring the received quantum state authentication message information, by using the same preshared key as the preshared key of the transmitting end 1801, and performs measurement (S18060). The receiving end 1802 stores the measured quantum state authentication message information (S18070). Next, the receiving end 1802 transmits the measured quantum state authentication message information (measurement value) to the transmitting end 1801 via a classical channel (S18080).

The transmitting end 1801 receives from the receiving end 1802 the quantum state authentication message information (measurement value) measured by the receiving end 1802, and calculates (estimates) the error rate by comparing the received quantum state authentication message information (measurement value) measured by the receiving end 1802 and the classical message information (authentication message information) for authentication generated by the transmitting end 1801 (S18090).

Next, the transmitting end 1801 determines whether the error rate calculated (estimated) in S18090 is above a QBER threshold (S18110). The pass (success) of the authentication is determined based on a determination result in S18110. If the error rate estimated in S18110 is lower than the QBER threshold, it is determined that the authentication has succeeded (S18111), or if the error rate estimated in S18110 is equal to or higher than the QBER threshold, it is determined that the authentication has failed (S18113). Once it is determined that the authentication has failed, the rest of the secret key sharing process is suspended (S18115).

**Configuration of Quantum Coding Communication System based on User Authentication Method using Pre-shared Key for Basis Selection**

Hereinafter, a method of configuring a quantum coding communication system based on a user authentication method using a pre-shared key for basis selection, proposed in the present disclosure, will be described.

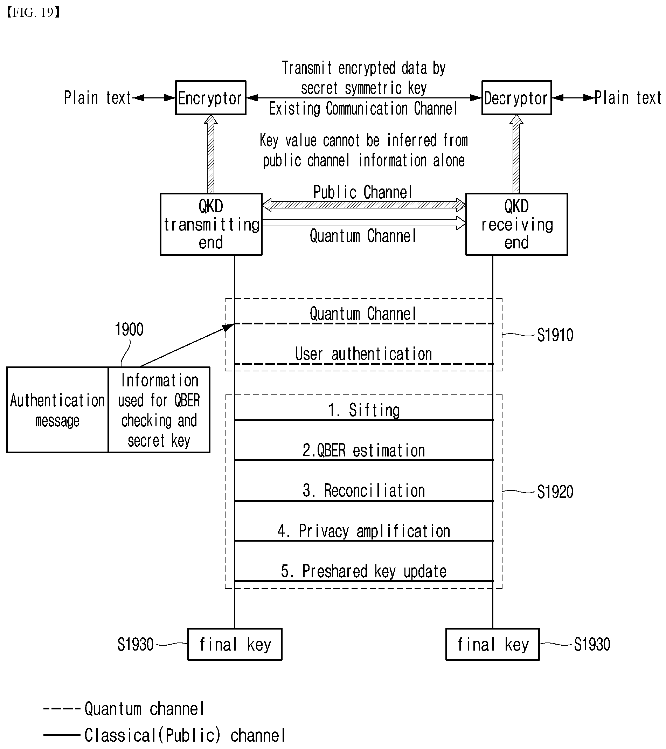

FIG. 19 is a view showing an example of a quantum coding communication system based on a user authentication method using a pre-shared key for basis selection.

A QKD transmitting end generates message information 1900 including (i) authentication message information used for user authentication, (ii) information used for QBER checking, and (iii) secret key information used to ensure the security of data sent over a classical channel (S1910). In this case, as opposed to the QBER estimation information or the information used as a secret key, included in the message information 1900, the position of the authentication message information in the message information 1900 may be previously designated and shared between the transmitting and receiving ends, as previously agreed between the transmitting and receiving ends. Accordingly, the position of the authentication message information in the message information 1900 is determined based on a previously agreed position, and 1900 in FIG. 19 indicates that a front portion of transmission information is used as the authentication message information. In the step S1910, a user authentication process is carried out to check whether the QKD transmitting end and the QKD receiving end are pre-authorized users by using the received authentication message information. In the user authentication process in the step S1910, a user authentication technique proposed in the present disclosure is applied, in which a basis is selected based on a pre-shared key. The pre-shared key used in the user authentication process needs to be previously shared (initial user authentication) or updated (user authentication performed after the initial user authentication) before the use authentication process in FIG. 19 is started, and the process of previously sharing or updating the pre-shared key may be performed before a secret key and a QBER checking sequence are generated in a QKD technique, although FIG. 19 illustrates that this process is performed in the first stage of the user authentication process.

If the user authentication succeeds as a result of the user authentication process in the step S1910, the transmitting and receiving ends perform postprocessing of a secret symmetric key used for data encryption (S1920). Here, the postprocessing process is performed by sifting, QBER estimation, error reconciliation, and privacy amplification. Through the postprocessing process, a secret symmetric key that ensures security is obtained (S1930).

However, it is necessary to update the pre-shared key used for the authentication process since the user authentication process needs to be carried out each time a secret key is sent over a quantum channel. To update the pre-shared key, some of secret symmetric keys generated through the postprocessing process are used as a pre-shared key used for the next user authentication process. The other secret keys other than the secret keys used for updating the pre-shared key are used for encryption/decryption of data sent over a classical channel.

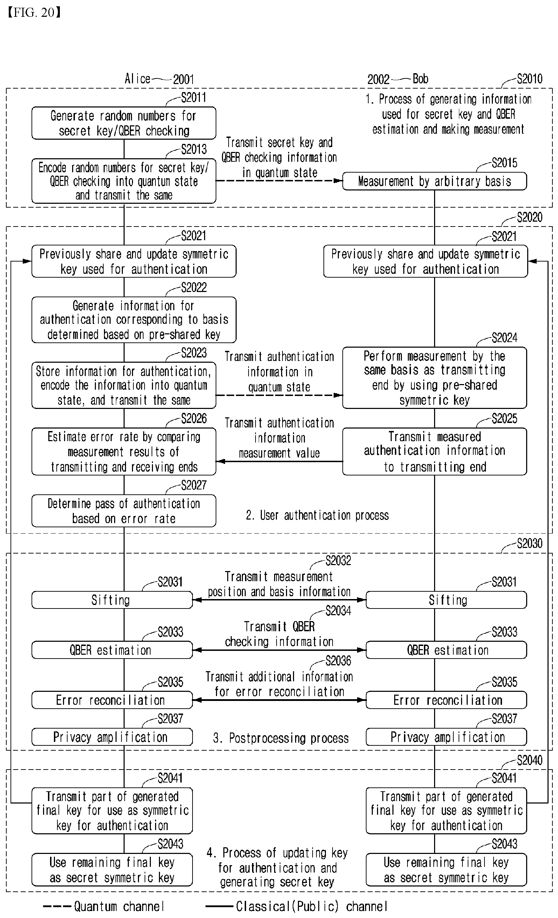

FIG. 20 is a flowchart showing an example of a QKD system including a pre-shared key-based user authentication process and a pre-shared key updating method.

S2010: The step S2010 represents a process of transmitting information used for a secret key and for QBER estimation over a quantum channel and making a measurement. More specifically, the transmitting end 2001 generates random numbers for a secret key and QBER checking (S2011). Afterwards, the transmitting end 2001 encodes the generated random numbers for a secret key and QBER checking and transmits them to the receiving end 2002 (S2013). Next, the receiving end 2002 measures the received quantum state information by using an arbitrary basis (S2015).

S2020: The step S2020 represents a user authentication technique proposed in the present disclosure. First, the same preshared key for user authentication is previously shared between the transmitting and receiving ends 2001 and 2002 or updated (S2021). In this case, the preshared key has the same length as authentication message information used for authentication. Here, the preshared key is shared before a secret key is sent in a QKD system, and refers to a symmetric key that can be used as a one time pad (OTP). The preshared key is discarded after one-time use, and replaced through a process of being updated with a new preshared key.

Next, the transmitting end 2001 generates information for authentication (S2022). Next, the transmitting end 2001 stores the generated information for authentication, determines a basis for encoding (polarization coding) the information for authentication based on a preshared key value, and encodes the information for authentication into a quantum state by using the determined basis and transmits it to the receiving end 2002. The transmitting end stores information for authentication, encodes the information into quantum state, and transmits the same (S2023).

The receiving end 2002 receives the quantum state authentication message information from the transmitting end 2001, selects a measurement basis for measuring the received quantum state authentication message information, by using the same preshared key as the transmitting end 2001, performs measurement, and stores the measured quantum state authentication message information (S2024).

Next, the receiving end 2002 transmits the measured quantum state authentication message information (measurement value) to the transmitting end 2001 via a classical channel (S2025).

The transmitting end 2001 receives from the receiving end 2002 the quantum state authentication message information (measurement value) measured by the receiving end 2002, and calculates (estimates) the error rate by comparing the received quantum state authentication message information (measurement value) measured by the receiving end 2002 and the classical message information (authentication message information) for authentication generated by the transmitting end 2001 (S2026).

Next, the transmitting end 2001 determines whether the authentication is passed or not based on the error rate calculated (estimated) in S2026 (S2027). More specifically, the transmitting end 2001 determines whether the error rate calculated (estimated) in S2026 is above a QBER threshold. The pass (success) of the authentication is determined based on a determination result. If the estimated error rate is lower than the QBER threshold, it is determined that the authentication has succeeded, or if the estimated error rate is equal to or higher than the QBER threshold, it is determined that the authentication has failed. Once it is determined that the authentication has failed, the rest of the secret key sharing process is suspended.

S2030: Once it is determined that the authentication has succeeded, the step S2030 is performed. The step 2030 represents a postprocessing process required for a secret symmetric key to be shared between the transmitting and receiving ends. More specifically, the postprocessing process is performed by sifting (S2031), QBER estimation (S2033), error reconciliation (S2035), and privacy amplification (S2037). In this case, in the step S2031, a measurement position and basis information are exchanged between the transmitting and receiving ends 2001 and 2002 (S2032). Also, in the step S2033, QBER checking information is exchanged between the transmitting and receiving ends 2001 and 2002 (S2034). Next, in the step S2035, additional information for error reconciliation is exchanged between the transmitting and receiving ends 2001 and 2002 (S2036). Through the postprocessing process, a secret symmetric key that ensures security is obtained.

S2040: The step S2040 represents a process of updating a key for authentication and generating a secret key. After completion of the postprocessing process, in this step, the process (S2041) of separating part of a final shared symmetric key and updating it as a pre-shared key used for the next authentication process and the process S2043 of using the remaining information, which is left over from the pre-shared key update, as a secret key are performed.

**Effects**

The present disclosure proposes a user authentication method using a pre-shared symmetric key, that ensures security against a man-in-the-middle attack in a QKD protocol, and the following effects may be achieved according to a method proposed in the present disclosure.

First, as opposed to the basis selection scheme in the existing authentication method, a transmitting end and a receiving end are able to select bases used for encoding/measurement, respectively, based on a pre-shared key, thereby solving the problem of partial removal of authentication information generated by the transmitting end in the course of basis selection by the receiving end. More specifically, in an existing quantum coding communication method, the transmitting end does not give the receiving end basis information used at the transmitting end before receiving information from the receiving end, in order to ensure security, and therefore the receiving end measures/receives transmission information through random basis selection when measuring received information. Thus, in regard to information at a specific position, there is a 50 % probability that a basis used for encoding by the transmitting end and a basis used for measurement by the receiving end will not match, and therefore the transmitting and receiving ends exchange their basis information with each other via a classical channel, and information measured as mismatching bases is discarded, since Accordingly, using the existing basis selection scheme in the authentication process may lead to partial loss of authentication information. However, with a method proposed in the present disclosure, based on the idea that the authentication process is performed based on the same pre-shared key previously shared and owned by the transmitting and receiving ends, a pre-shared key may be used to achieve a basis match between the transmitting end and the receiving end, thereby solving the problem of information loss caused by a basis selection mismatch between the transmitting end and the receiving end.

Next, in a method proposed in the present disclosure, the transmitting and receiving ends select a basis based on a pre-shared key, and no sifting process is required which is performed via a classical channel to achieve a basis match between the transmitting and receiving ends, thereby decreasing the complexity of the overall authentication procedure by the omission of the sifting process. More specifically, in the existing quantum coding communication method, the receiving end randomly selects a basis for measuring quantum information sent from the transmitting end, the transmitting end and the receiving end exchange information on the bases used by them with each other via a classical channel, and the transmitting end and the receiving end need to perform a sifting process to identify a position where the bases match and then exchange the position where the bases match. However, in the method proposed in the present disclosure, the transmitting end and the receiving end are able to select the same basis based on the value of the same pre-shared key previously shared between the transmitting and receiving ends, which eliminates the need for the sifting process and therefore lower the complexity of configuration of the authentication process.

Moreover, in the method proposed in the present disclosure, the pass of authentication is determined based on error rate, thus making it unnecessary to perform an error correction process to achieve a match between authentication information generated individually by the transmitting and receiving ends. More specifically, in the existing authentication method, the pass of authentication is determined based on whether the authentication information generated individually by the transmitting and receiving ends match each other. To determine the pass of authentication, it is necessary to perform a process of correcting an error that occurs during a transmission process over a quantum channel. However, in the method proposed in the present disclosure, the pass of authentication is determined depending on whether the error rate that occurs in the course of passing through a channel is equal to or lower than a QBER threshold, which eliminates the need to use an error correction code and therefore simplifies the authentication process.

Lastly, a method proposed in the present disclosure enables direct user authentication between objects connected via a quantum channel. More specifically, in the WCA method conventionally used as a QKD user authentication technology, authentication is carried out via a classical channel, and therefore security can be guaranteed only under the premise that an object connected via a quantum channel and an object connected via a classical channel are always the same. However, the method proposed in the present disclosure is capable of performing direct user authentication on the object connected over the quantum channel, since authentication information is transmitted directly via the quantum channel and the pass of user authentication is determined by using the information sent via the quantum channel.

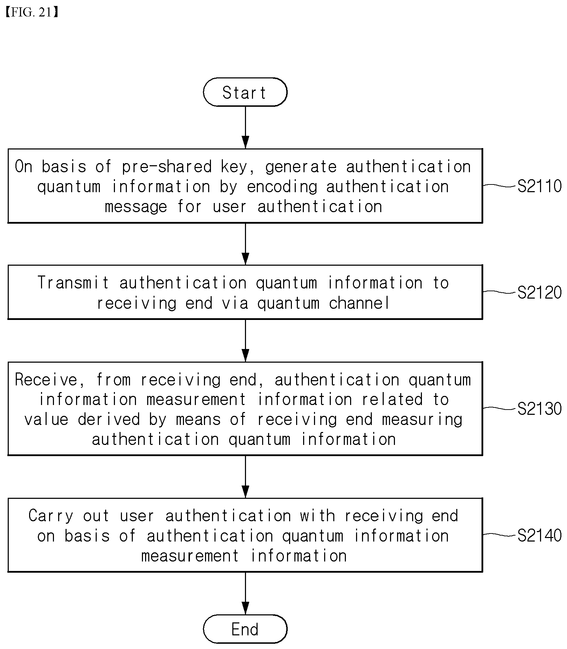

FIG. 21 is a flowchart showing an example in which a user authentication method proposed in the present disclosure is carried out by a transmitting end.

To perform user authentication in a quantum communication system, the transmitting end generates authentication quantum information by encoding an authentication message for user authentication on the basis of a pre-shared key (S2110).

Here, a basis, for encoding each bit element constituting the authentication message, the respective bit elements corresponding to the respective positions of bit elements constituting the pre-shared key, is determined on the basis of respective bit values of the bit elements constituting the pre-shared key.

Next, the transmitting end transmits the authentication quantum information to a receiving end via a quantum channel (S2120).

Afterwards, the transmitting end receives, from the receiving end, authentication quantum information measurement information related to a value derived by means of the receiving end measuring the authentication quantum information (S2130).

Next, the transmitting end carries out user authentication with the receiving end on the basis of the authentication quantum information measurement information (S2140).

Moreover, the transmitting end includes: a transmitter for transmitting a wireless signal; a receiver for receiving a wireless signal; at least one processor; and at least one computer memory operably connectable to the at least one processor, and storing instructions that, when executed by the at least one processor, perform operations. In this case, the operations include the steps described above in FIG. 21.

Additionally, the operations described in FIG. 21 may be stored in a non-transitory computer readable medium (CRM) that stores one or more instructions. The non-transitory computer readable medium stores one or more instructions executable by one or more processors, and the one or more instructions cause the transmitting end to perform the operations described in FIG. 21.

Furthermore, a device including one or more memories and one or more processors functionally connected to the one or more memories controls the one or more processors to perform the operations described in FIG. 21.

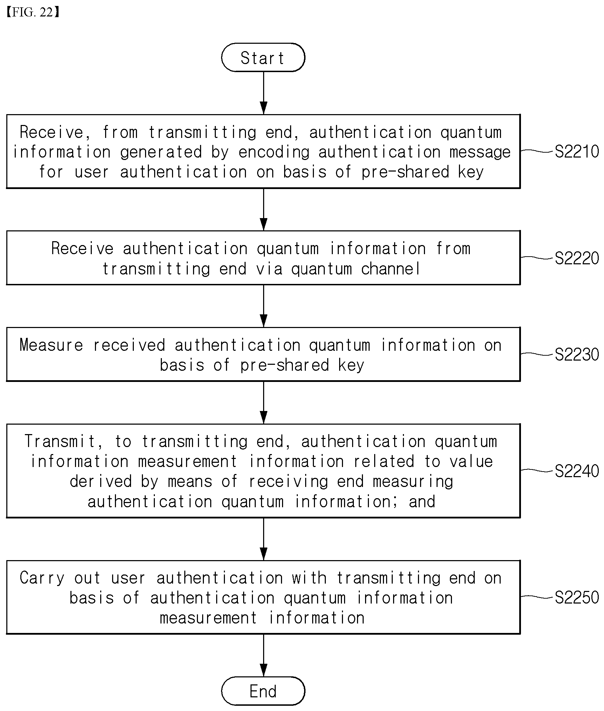

FIG. 22 is a flowchart showing an example in which a user authentication method proposed in the present disclosure is carried out by a receiving end.

To perform user authentication in a quantum communication system, the receiving end receives, from a transmitting end, authentication quantum information generated by encoding an authentication message for user authentication on the basis of a pre-shared key (S2110).

Here, a basis, for encoding each bit element constituting the authentication message, the respective bit elements corresponding to the respective positions of bit elements constituting the pre-shared key, is determined on the basis of respective bit values of the bit elements constituting the pre-shared key.

Afterwards, the receiving end receives the authentication quantum information from the receiving end via a quantum channel (S2220).

Next, the receiving end measures the received authentication quantum information on the basis of the pre-shared key (S2230).

In this case, a measurement basis, for measuring each bit element constituting the received authentication quantum information, the respective bit elements corresponding to the respective positions of bit elements constituting the pre-shared key, is determined on the basis of respective bit values of the bit elements constituting the pre-shared key.

Next, the receiving end transmits, to the transmitting end, authentication quantum information measurement information related to a value derived by means of the receiving end measuring the authentication quantum information (S2240).

Afterwards, the receiving end carries out user authentication with the transmitting end on the basis of the authentication quantum information measurement information (S2250).

Moreover, the receiving end includes: a transmitter for transmitting a wireless signal; a receiver for receiving a wireless signal; at least one processor; and at least one computer memory operably connectable to the at least one processor, and storing instructions that, when executed by the at least one processor, perform operations. In this case, the operations include the steps described above in FIG. 22.

Additionally, the operations described in FIG. 22 may be stored in a non-transitory computer readable medium (CRM) that stores one or more instructions. The non-transitory computer readable medium stores one or more instructions executable by one or more processors, and the one or more instructions cause the receiving end to perform the operations described in FIG. 22.

Furthermore, a device including one or more memories and one or more processors functionally connected to the one or more memories controls the one or more processors to perform the operations described in FIG. 22.

The embodiments of the present disclosure described above are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

[Industrial Applicability]

Although the present disclosure has been described mainly with respect to an example applied to 3GPP LTE/LTE-A and 5G systems, it may be applied to various wireless communication systems in addition to the 3GPP LTE/LTE-A and 5G systems.

**Claims**

1. A method for a transmitting end to carry out user authentication in a quantum communication system, the method comprising:

   on the basis of a pre-shared key, generating authentication quantum information by encoding an authentication message for user authentication,
   wherein a basis, for encoding each bit element constituting the authentication message, the respective bit elements corresponding to the respective positions of bit elements constituting the pre-shared key, is determined on the basis of respective bit values of the bit elements constituting the pre-shared key;
   transmitting the authentication quantum information to a receiving end via a quantum channel;
   receiving, from the receiving end, authentication quantum information measurement information related to a value derived by means of the receiving end measuring the authentication quantum information; and
   carrying out user authentication with the receiving end on the basis of the authentication quantum information measurement information.

2. The method of claim 1, wherein the length of the pre-shared key and the length of the authentication message for user authentication are equal.

3. The method of claim 1, wherein the pre-shared key is used to determine a basis used by the receiving end to measure the authentication quantum information.

4. The method of claim 1, wherein the success of the user authentication is determined based on an error rate between (i) a value of the authentication message generated by the transmitting end and (ii) a value of the authentication quantum information measurement information acquired by the transmitting end.

5. The method of claim 2, wherein the success of the user authentication is determined based on a result of a comparison between (i) an error rate between a value of the authentication message generated by the transmitting end and a value of the authentication quantum information measurement information acquired by the transmitting end and (ii) a threshold for determining the success of user authentication.

6. The method of claim 5, wherein the user authentication succeeds, based on (i) the error rate, between a value of the authentication message generated by the transmitting end and a value of the authentication quantum information measurement information acquired by the transmitting end, being lower than (ii) the threshold for determining the success of user authentication.

7. The method of claim 6, wherein the user authentication fails based on i) the error rate, between a value of the authentication message generated by the transmitting end and a value of the authentication quantum information measurement information acquired by the transmitting end, being equal to or higher than (ii) the threshold for determining the success of user authentication.

8. The method of claim 7, wherein a QBER threshold used for QBER (Quantum bit error rate) estimation for determining the presence of an eavesdropper on the quantum channel is used as the threshold for determining the success of user authentication.

9. The method of claim 6, further comprising transmitting, to the receiving end, a secret key used to encrypt classical information transmitted via a classical channel, based on the success of the user authentication.

10. The method of claim 9, further comprising:

   encrypting the classical information based on the secret key; and
   transmitting the encrypted classical information to the receiving end via the classical channel.

11. A transmitting end that carries out user authentication in a quantum communication system, the transmitting end comprising:

   a transmitter for transmitting a wireless signal;
   a receiver for receiving a wireless signal;
   at least one processor; and
   at least one computer memory operably connectable to the at least one processor, and storing instructions that, when executed by the at least one processor, perform operations,
   the operations comprising:

      on the basis of a pre-shared key, generating authentication quantum information by encoding an authentication message for user authentication,
      wherein a basis, for encoding each bit element constituting the authentication message, the respective bit elements corresponding to the respective positions of bit elements constituting the pre-shared key, is determined on the basis of respective bit values of the bit elements constituting the pre-shared key;
      transmitting the authentication quantum information to a receiving end via a quantum channel;
      receiving, from the receiving end, authentication quantum information measurement information related to a value derived by means of the receiving end measuring the authentication quantum information; and
      carrying out user authentication with the receiving end on the basis of the authentication quantum information measurement information.

12. A method for a receiving end to carry out user authentication in a quantum communication system, the method comprising:

   receiving, from a transmitting end, authentication quantum information generated by encoding an authentication message for user authentication on the basis of a pre-shared key,
   wherein a basis, for encoding each bit element constituting the authentication message, the respective bit elements corresponding to the respective positions of bit elements constituting the pre-shared key, is determined on the basis of respective bit values of the bit elements constituting the pre-shared key;
   receiving the authentication quantum information from the transmitting end via a quantum channel;
   measuring the received authentication quantum information on the basis of the pre-shared key,
   wherein a measurement basis, for measuring each bit element constituting the received authentication quantum information, the respective bit elements corresponding to the respective positions of bit elements constituting the pre-shared key, is determined on the basis of respective bit values of the bit elements constituting the pre-shared key;
   transmitting, to the transmitting end, authentication quantum information measurement information related to a value derived by means of the receiving end measuring the authentication quantum information; and
   carrying out user authentication with the transmitting end on the basis of the authentication quantum information measurement information.

13. A receiving end that carries out user authentication in a quantum communication system, the receiving end comprising:

a transmitter for transmitting a wireless signal;
a receiver for receiving a wireless signal;
at least one processor; and
at least one computer memory operably connectable to the at least one processor, and storing instructions that, when executed by the at least one processor, perform operations,
the operations comprising:

receiving, from a transmitting end, authentication quantum information generated by encoding an authentication message for user authentication on the basis of a pre-shared key,
wherein a basis, for encoding each bit element constituting the authentication message, the respective bit elements corresponding to the respective positions of bit elements constituting the pre-shared key, is determined on the basis of respective bit values of the bit elements constituting the pre-shared key;
receiving the authentication quantum information from the transmitting end via a quantum channel;
measuring the received authentication quantum information on the basis of the pre-shared key,
wherein a measurement basis, for measuring each bit element constituting the received authentication quantum information, the respective bit elements corresponding to the respective positions of bit elements constituting the pre-shared key, is determined on the basis of respective bit values of the bit elements constituting the pre-shared key;
transmitting, to the transmitting end, authentication quantum information measurement information related to a value derived by means of the receiving end measuring the authentication quantum information; and
carrying out user authentication with the transmitting end on the basis of the authentication quantum information measurement information.

14. A non-transitory computer readable medium (CRM) that stores one or more instructions, the one or more instructions being executable by one or more processors and comprising:

on the basis of a pre-shared key, generating authentication quantum information by encoding an authentication message for user authentication,
wherein a basis, for encoding each bit element constituting the authentication message, the respective bit elements corresponding to the respective positions of bit elements constituting the pre-shared key, is determined on the basis of respective bit values of the bit elements constituting the pre-shared key;
transmitting the authentication quantum information to a receiving end via a quantum channel;
receiving, from the receiving end, authentication quantum information measurement information related to a value derived by means of the receiving end measuring the authentication quantum information; and
carrying out user authentication with the receiving end on the basis of the authentication quantum information measurement information.

15. A device comprising one or more memories and one or more processors functionally connected to the one or more memories,
wherein the one or more processors control the device to:

on the basis of a pre-shared key, generate authentication quantum information by encoding an authentication message for user authentication,
wherein a basis, for encoding each bit element constituting the authentication message, the respective bit elements corresponding to the respective positions of bit elements constituting the pre-shared key, is determined on the basis of respective bit values of the bit elements constituting the pre-shared key;
transmit the authentication quantum information to a receiving end via a quantum channel;
receive, from the receiving end, authentication quantum information measurement information related to a value derived by means of the receiving end measuring the authentication quantum information; and
carry out user authentication with the receiving end on the basis of the authentication quantum information measurement information.

【FIG. 1】

【FIG. 2】

【FIG. 3】

【FIG. 4】

Device(400)

Communication unit(410)
(e.g., 5G communication unit)

Communication circuit(412)
(e.g., processor(s),memory(s))

Transceiver(s)(414)
(e.g., RF unit(s),antenna(s))

Control unit(420)
(e.g., processor(s))

Memory unit(430)
(e.g., RAM, storage)

Additional components(440)
(e.g., power unit/battery,
I/O unit,driving unit,
computing unit)

【FIG. 5】

500

540a
Power supply
unit

520

530

508

510
Communication
unit

Control
unit

Memory
unit

540c
I/O unit
Display
540d

540b
Interface
unit

【FIG. 6】

INITIAL CELL SEARCH — S611 — PSS-SSS& [DL RS]& PBCH

SYSTEM INFORMATION RECEPTION — S612 — PDCCH/PDSCH (BCCH)

RANDOM ACCESS PROCEDURE — S613 PRACH — S614 PDCCH/PDSCH — S615 PUSCH — S616 PDCCH/PDSCH

GENERAL DL/UL Tx/Rx — S617 PDCCH/PDSCH — S618 PUSCH/PUCCH

· DL/UL ACK/NACK
· UE CQI/PMI RI REPORT USING PUSCH AND PUCCH

【FIG. 7】

【FIG. 8】

Resource grid

1 RE

1 subcarrier

1 symbol

A carrier

A BMP

1RB

l=0 · · ·

k=0

【FIG. 9】

【FIG. 10】

【FIG. 11】

【FIG. 12】

【FIG. 13】

【FIG. 14】

✓ If $h(m_1)=h(m_2)=t$ for hash function

$m_1, m_2 \in M, h_k \in H, t \in T$

M:a set of possible message

H:a set of hash functios

T:a set of tags

$\delta_h(m_1,m_2)=1$ if $h(m_1)=h(m_2)$, $\delta_h(m_1,m_2)=0$ if $h(m_1)=h(m_2)$,

*The number of collisions: $\delta_h(m_1,m_2)=\sum_{h\in H}\delta_h(m_1,m_2)$

*Probability for the two distinct values(=Collision probability )= $\dfrac{\delta_H(x,y)}{|H|}$

【FIG. 15】

【FIG. 16】

1601

Alice

1602

Bob

1611

Preshared key: 0 1 1 0

Basis: ✚ ✖ ✖ ✚    ✚:0 ✖:1

1621

Preshared key: 0 1 1 0

Measurement Basis: ✚ ✖ ✖ ✚

Authentication
message:    0 1 0 1

Quantum state: ━ ╲ ╱ │

━ ╱:0  ╲ │:1

Quantum channel

Received
Quantum state: ━ ╲ ╱ │

1613

1623

Authentication code: 0 1 0 1 ⟺ Authentication code: 0 1
0 1

Authentication by checking for match between
authentication messages of transmitter and receiver

1630

【FIG. 17】

[FIG. 18]

1801

Alice    S18010

Pre-shared key

↓ S18020

Determine basis of message
sequence used for authentication
based on pre-shared key   ✚:0 ✖:1

↓ S18030

Generate and store classical
message information
used for authentication

↓ S18040

Generate quantum state
information to be transmitted
for authentication according to
basis information and
corresponding classical
message information

↓ S18090

Calculate error rate by comparing
authentication messages of
transmitting and receiving ends

↓ S18100

Compare error rate with
QBER threshold

↓ S18110

QBER < Error rate    Yes → 

No   S18111

Success of authentication

---

S18050

Transmit quantum state
information for
authentication via
quantum channel →

S18080

Receiving end transmits
measurement value
via classical channel ←

---

1802

Bob

Pre-shared key

↓   S18060

Select basis based on
pre-shared key and
perform measurement

↓ S18070

Store measurement result

---

S18113

Failure of
authentication →

S18115

Process is
suspended

---

44

【FIG. 19】

Transmit encrypted data by
secret symmetric key

Plain text ◄─► Encryptor ◄──────────────────────► Decryptor ◄─► Plain text
                          Existing Communication Channel

Key value cannot be inferred from
public channel information alone

Public Channel

QKD
transmitting ◄══════════════► QKD
end                            receiving
        Quantum Channel        end

┌─────────────────────────────────────┐
│          Quantum Channel            │ ──S1910
│                                     │
│          User authentication        │
└─────────────────────────────────────┘

1900

┌──────────────┬──────────────┐     ┌─────────────────────────────────────┐
│              │ Information   │     │          1. Sifting                 │
│ Authentication│ used for QBER │    ├─────────────────────────────────────┤
│   message    │ checking and  │     │       2.QBER estimation             │
│              │  secret key   │     ├─────────────────────────────────────┤
└──────────────┴──────────────┘     │       3. Reconciliation             │ ──S1920
                                     ├─────────────────────────────────────┤
                                     │     4. Privacy amplification        │
                                     ├─────────────────────────────────────┤
                                     │     5. Preshared key update         │
                                     └─────────────────────────────────────┘

S1930──  final key                        final key  ──S1930

─ ─ ─ ─ Quantum channel
─────── Classical(Public) channel

【FIG. 20】

Alice——2001    2002——Bob    S2010

1. Process of generating information used for secret key and QBER estimation and making measurement

S2011
Generate random numbers for secret key/QBER checking

Transmit secret key and QBER checking information in quantum state

S2013
Encode random numbers for secret key/QBER checking into quantum state and transmit the same

S2015
Measurement by arbitrary basis

S2020

S2021
Previously share and update symmetric key used for authentication

S2021
Previously share and update symmetric key used for authentication

S2022
Generate information for authentication corresponding to basis determined based on pre-shared key

S2023
Store information for authentication, encode the information into quantum state, and transmit the same

Transmit authentication information in quantum state

S2024
Perform measurement by the same basis as transmitting end by using pre-shared symmetric key

S2026
Estimate error rate by comparing measurement results of transmitting and receiving ends

Transmit authentication information measurement value

S2025
Transmit measured authentication information to transmitting end

S2027
Determine pass of authentication based on error rate

2. User authentication process

S2030

S2032
Transmit measurement position and basis information

S2031
Sifting

S2031
Sifting

S2034
Transmit QBER checking information

S2033
QBER estimation

S2033
QBER estimation

S2036
Transmit additional information for error reconciliation

S2035
Error reconciliation

S2035
Error reconciliation

S2037
Privacy amplification

3. Postprocessing process

S2037
Privacy amplification

S2040

S2041
Transmit part of generated final key for use as symmetric key for authentication

S2041
Transmit part of generated final key for use as symmetric key for authentication

S2043
Use remaining final key as secret symmetric key

4. Process of updating key for authentication and generating secret key

S2043
Use remaining final key as secret symmetric key

--- Quantum channel    —— Classical(Public) channel

【FIG. 21】

```
                        ( Start )
                            |
                            v
+-------------------------------------------------------+
| On basis of pre-shared key, generate authentication   |
|    quantum information by encoding authentication      |~~S2110
|        message for user authentication                 |
+-------------------------------------------------------+
                            |
                            v
+-------------------------------------------------------+
|   Transmit authentication quantum information to       |~~S2120
|        receiving end via quantum channel               |
+-------------------------------------------------------+
                            |
                            v
+-------------------------------------------------------+
| Receive, from receiving end, authentication quantum    |
|   information measurement information related to        |~~S2130
|  value derived by means of receiving end measuring      |
|        authentication quantum information               |
+-------------------------------------------------------+
                            |
                            v
+-------------------------------------------------------+
| Carry out user authentication with receiving end       |
|   on basis of authentication quantum information        |~~S2140
|           measurement information                       |
+-------------------------------------------------------+
                            |
                            v
                         ( End )
```

【FIG. 22】

```
                    ╭─────────╮
                    │  Start  │
                    ╰────┬────╯
                         │
                         ▼
  ┌──────────────────────────────────────────────────┐
  │ Receive, from transmitting end, authentication    │
  │ quantum information generated by encoding          │───S2210
  │ authentication message for user authentication     │
  │ on basis of pre-shared key                         │
  └──────────────────────┬───────────────────────────┘
                         │
                         ▼
  ┌──────────────────────────────────────────────────┐
  │ Receive authentication quantum information from    │───S2220
  │ transmitting end via quantum channel               │
  └──────────────────────┬───────────────────────────┘
                         │
                         ▼
  ┌──────────────────────────────────────────────────┐
  │ Measure received authentication quantum information│───S2230
  │ on basis of pre-shared key                         │
  └──────────────────────┬───────────────────────────┘
                         │
                         ▼
  ┌──────────────────────────────────────────────────┐
  │ Transmit, to transmitting end, authentication      │
  │ quantum information measurement information related│───S2240
  │ to value derived by means of receiving end         │
  │ measuring authentication quantum information; and  │
  └──────────────────────┬───────────────────────────┘
                         │
                         ▼
  ┌──────────────────────────────────────────────────┐
  │ Carry out user authentication with transmitting    │
  │ end on basis of authentication quantum information │───S2250
  │ measurement information                            │
  └──────────────────────┬───────────────────────────┘
                         │
                         ▼
                    ╭─────────╮
                    │   End   │
                    ╰─────────╯
```

## INTERNATIONAL SEARCH REPORT

| International application No. |
|---|
| **PCT/KR2022/014384** |

**A. CLASSIFICATION OF SUBJECT MATTER**

**H04L 9/08**(2006.01)i

According to International Patent Classification (IPC) or to both national classification and IPC

**B. FIELDS SEARCHED**

Minimum documentation searched (classification system followed by classification symbols)

H04L 9/08(2006.01); H04B 10/70(2013.01); H04B 10/85(2013.01); H04L 1/20(2006.01); H04L 29/06(2006.01); H04L 9/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양자 통신(quantum communication), 사전 공유된 키(pre-shared key), 인증 메시지(authentication message), 인증 양자 정보(authentication quantum information), 측정(measurement), 사용자 인증(user authentication)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2222080 B1 (ELECTRONICS AND TELECOMMUNICATIONS RESEARCH INSTITUTE) 04 March 2021 (2021-03-04)<br>See paragraphs [0134]-[0148]; claim 11; and figure 6. | 1,3-4,11-15 |
| A | | 2,5-10 |
| Y | KR 10-2019-0091838 A (ELECTRONICS AND TELECOMMUNICATIONS RESEARCH INSTITUTE) 07 August 2019 (2019-08-07)<br>See paragraphs [0089] and [0133]-[0136]; and figure 3. | 1,3-4,11-15 |
| A | US 2019-0052460 A1 (ALIBABA GROUP HOLDING LIMITED) 14 February 2019 (2019-02-14)<br>See paragraphs [0032]-[0075]; and figure 1. | 1-15 |
| A | KR 10-2063031 B1 (ELECTRONICS AND TELECOMMUNICATIONS RESEARCH INSTITUTE) 07 January 2020 (2020-01-07)<br>See paragraphs [0129]-[0189]; and figure 3. | 1-15 |

☑ Further documents are listed in the continuation of Box C.  ☑ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "D" document cited by the applicant in the international application | "X" | document of particular relevance; the claimed invention cannot be considered novel or cannot be considered to involve an inventive step when the document is taken alone |
| "E" earlier application or patent but published on or after the international filing date | | |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" | document member of the same patent family |
| "P" document published prior to the international filing date but later than the priority date claimed | | |

| Date of the actual completion of the international search | Date of mailing of the international search report |
|---|---|
| **19 June 2023** | **19 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/014384** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2017-0130964 A (ELECTRONICS AND TELECOMMUNICATIONS RESEARCH INSTITUTE) 29 November 2017 (2017-11-29) See paragraphs [0238]-[0253]; and figure 9. | 1-15 |

Form PCT/ISA/210 (second sheet) (July 2022)

## INTERNATIONAL SEARCH REPORT
### Information on patent family members

International application No.

**PCT/KR2022/014384**

| Patent document cited in search report | | | Publication date (day/month/year) | Patent family member(s) | | | Publication date (day/month/year) |
|---|---|---|---|---|---|---|---|
| KR | 10-2222080 | B1 | 04 March 2021 | US | 2021-0266157 | A1 | 26 August 2021 |
| KR | 10-2019-0091838 | A | 07 August 2019 | KR | 10-2028098 | B1 | 02 October 2019 |
| | | | | US | 10887094 | B2 | 05 January 2021 |
| | | | | US | 2019-0238326 | A1 | 01 August 2019 |
| US | 2019-0052460 | A1 | 14 February 2019 | AU | 2016-220364 | A1 | 28 September 2017 |
| | | | | AU | 2016-220364 | A2 | 14 February 2019 |
| | | | | AU | 2016-220364 | B2 | 14 May 2020 |
| | | | | BR | 112017017488 | A2 | 17 April 2018 |
| | | | | CA | 2976784 | A1 | 25 August 2016 |
| | | | | CN | 105991285 | A | 05 October 2016 |
| | | | | CN | 105991285 | B | 11 June 2019 |
| | | | | EP | 3259870 | A1 | 27 December 2017 |
| | | | | EP | 3259870 | A4 | 28 March 2018 |
| | | | | JP | 2018-509117 | A | 29 March 2018 |
| | | | | JP | 6619455 | B2 | 11 December 2019 |
| | | | | KR | 10-2017-0118190 | A | 24 October 2017 |
| | | | | TW | 201631509 | A | 01 September 2016 |
| | | | | TW | I689837 | B | 01 April 2020 |
| | | | | US | 10038554 | B2 | 31 July 2018 |
| | | | | US | 10432396 | B2 | 01 October 2019 |
| | | | | US | 2016-0241396 | A1 | 18 August 2016 |
| | | | | WO | 2016-133724 | A1 | 25 August 2016 |
| KR | 10-2063031 | B1 | 07 January 2020 | US | 11533171 | B2 | 20 December 2022 |
| | | | | US | 2020-0313879 | A1 | 01 October 2020 |
| KR | 10-2017-0130964 | A | 29 November 2017 | KR | 10-1830339 | B1 | 29 March 2018 |
| | | | | US | 10958428 | B2 | 23 March 2021 |
| | | | | US | 2017-0338952 | A1 | 23 November 2017 |

Form PCT/ISA/210 (patent family annex) (July 2022)